# EUROPÄISCHE PATENTSCHRIFT

(11) **EP 1 392 792 B1**
(45) Veröffentlichungstag und Bekanntmachung des Hinweises auf die Patenterteilung: **21.02.2007**
(21) Anmeldenummer: 02740536.4
(22) Anmeldetag: 29.04.2002
(51) Int. Cl.: C09K 19/30

(54) **FLÜSSIGKRISTALLINES MEDIUM**
LIQUID CRYSTALLINE MEDIUM
SUBSTANCE A CRISTAL LIQUIDE

(30) Priorität: 01.06.2001 DE 10126768
(43) Veröffentlichungstag der Anmeldung: 03.03.2004
(73) Patentinhaber: Merck Patent GmbH, 64293 Darmstadt (DE)
(72) Erfinder: KLASEN-MEMMER, Melanie, 67259 Heuchelheim (DE); KLEMENT, Dagmar, 64846 Gross-Zimmern (DE); BREMER, Matthias, 64295 Darmstadt (DE)
(86) Internationale Anmeldenummer: PCT/EP2002/004704
(87) Internationale Veröffentlichungsnummer: WO 2002/099010

(56) Entgegenhaltungen:
- EP-A- 0 474 062
- EP-A- 0 969 071
- EP-A- 1 106 671
- WO-A-89/08633
- DE-A- 10 112 955
- DE-A- 19 607 043
- DE-A- 19 803 112
- DE-A- 19 927 627
- US-A- 5 599 480
- US-A- 6 066 268
- US-B1- 6 217 953

## Beschreibung

Die vorliegende Erfindung betrifft ein flüssigkristallines Medium, insbesondere ein flüssigkristallines Medium auf der Basis eines Gemisches von Verbindungen mit negativer dielektrischer Anisotropie, sowie dessen Verwendung für elektrooptische Zwecke, und dieses Medium enthaltende Anzeigen, insbesondere für Anzeigen, die auf dem DAP- (Deformation aufgerichteter Phasen), ECB- (electrically controlled birefringence), CSH- (colour super homeotropic), VA- (vertically aligned), oder IPS-Effekt (In Plane Switching) beruhen.

Das Prinzip der elektrisch kontrollierten Doppelbrechung, der ECB- oder auch DAP-Effekt ("Deformation aufgerichteter Phasen") wurde erstmals 1971 beschrieben (M. F. Schieckel and K. Fahrenschon, "Deformation of nematic liquid crystals with vertical orientation in electrical fields", Appl. Phys. Lett. 19 (1971), 3912). Es folgten Arbeiten von J. F. Kahn (Appl. Phys. Lett. 20 (1972), 1193) und G. Labrunie und J. Robert (J. Appl. Phys. 44 (1973), 4869).

Die Arbeiten von J. Robert und F. Clerc (SID 80 Digest Techn. Papers (1980), 30), J. Duchene (Displays 7 (1986), 3) und H. Schad (SID 82 Digest Techn. Papers (1982), 244) haben gezeigt, daß flüssigkristalline Phasen hohe Werte für das Verhältnis der elastischen Konstanten K₃₃/K₁₁, hohe Werte für die optische Anisotropie Δn und Werte für die dielektrische (DK-) Anisotropie Δε von etwa -0,5 bis etwa -5 aufweisen müssen, um für hochinformative Anzeigeelemente basierend auf dem ECB-Effekt eingesetzt werden zu können. Auf dem ECB-Effekt basierende elektrooptische Anzeigeelemente weisen im ausgeschalteten Zustand eine homöotrope oder vertikale Randorientierung, d.h. eine Orientierung weitgehend senkrecht zu den Elektrodenoberflächen, auf.

Neuere Arten von ECB-Anzeigen mit homöotroper Randorientierung sind solche basierend auf dem CSH-, oder VA- (vertically aligned) Effekt, wobei letzterer auch unter den Begriffen VAN- (vertically aligned nematic) und VAC- (vertically aligned cholesteric) Effekt bekannt ist. CSH-Anzeigen sind bekannt unter anderem aus H.Hirai, Japan Displays 89 Digest, 184 (1989), J.F. Clerc et al., Japan Displays 89 Digest, 188 (1989) und J.F. Clerc, SID 91 Digest, 758 (1991). VAN-Anzeigen wurden u.a. in S. Yamauchi et al., SID Digest of Technical Papers, S. 378ff (1989), VAC-Anzeigen in K.A. Crabdall et al., Appl.Phys.Lett. 65, 4 (1994) beschrieben.

Die neueren VA-Anzeigen enthalten wie die bereits früher bekannten ECB-Anzeigen eine Schicht eines flüssigkristallinen Mediums zwischen zwei transparenten Elektroden, wobei das Flüssigkristallmedium einen negativen Wert der DK-Anisotropie Δε aufweist. Die Moleküle dieser Flüssigkristallschicht sind im ausgeschalteten Zustand homöotrop oder gekippt (engl.: "tilted") homöotrop orientiert. Aufgrund der negativen DK-Anisotropie findet im eingeschalteten Zustand eine Umorientierung der Flüssigkristallmoleküle parallel zu den Elektrodenflächen statt.

Im Gegensatz zu den herkömmlichen ECB-Anzeigen, in denen die Flüssigkristallmoleküle im eingeschalteten Zustand eine parallele Orientierung mit einer über die ganze Flüssigkristallzelle einheitlichen Vorzugsrichtung aufweisen, ist in den VAN- und VAC-Anzeigen diese einheitliche parallele Ausrichtung üblicherweise nur auf kleine Domänen innerhalb der Zelle beschränkt. Zwischen diesen Domänen, auch als Tilt-Domänen (engl.: tilt domains) bezeichnet, existieren Disklinationen.

Als Folge hiervon weisen VA-Anzeigen verglichen mit den herkömmlichen ECB-Anzeigen eine größere Blickwinkelunabhängigkeit des Kontrastes und der Graustufen auf. Außerdem sind solche Anzeigen einfacher herzustellen, da eine zusätzliche Behandlung der Elektrodenoberfläche zur einheitlichen Orientierung der Moleküle im eingeschalteten Zustand, wie z.B. durch Reiben, nicht mehr notwendig ist.

Im Unterschied zu den VAN-Anzeigen enthalten die Flüssigkristallmedien in VAC-Anzeigen noch zusätzlich eine oder mehrere chirale Verbindungen, wie z.B. chirale Dotierstoffe, die im eingeschalteten Zustand eine helikale Verdrillung der Flüssigkristallmoleküle in der Flüssigkristallschicht um einen Winkel zwischen 0 und 360 ° bewirken. Der Verdrillungswinkel beträgt dabei im bevorzugten Fall etwa 90 °.

Für Anzeigen mit vertikaler Randorientierung wurde außerdem die Verwendung von Kompensatoren, wie z.B. optisch uniaxial negative Kompensationsfilme, vorgeschlagen, um eine unerwünschte Lichtdurchlässigkeit des Anzeige im ausgeschalteten Zustand unter schrägem Beobachtungswinkel zu kompensieren.

Außerdem ist es möglich, durch eine spezielle Ausgestaltung der Elektroden die Vorzugsrichtung des Kipp- oder Tiltwinkels zu kontrollieren, ohne daß eine zusätzliche Oberflächenbehandlung der Elektroden, wie etwa durch eine Orientierungsschicht, nötig wäre. Eine CSH-Anzeige dieses Typs wird beispielsweise in Yamamoto et al., SID 91 Digest, 762 (1991) beschrieben.

In IPS-Anzeigen werden die elektrischen Signale so erzeugt, daß die elektrischen Felder eine signifikante Komponente parallel zur Flüssigkristallschicht aufweisen (In-Plane-Switching). In der internationalen Patentanmeldung WO 91/10936 wird eine solche Flüssigkristallanzeige offenbart. Die Prinzipien, solch eine Anzeige zu betreiben, werden z.B. beschrieben von R.A. Soref in Journal of Applied Physics, Vol. 45, Nr. 12, S. 5466-5468 (1974). In der EP 0 588 568 werden verschiedene Möglichkeiten zum Ansteuern solch einer Anzeige offenbart.

Diese IPS-Anzeigen können mit flüssigkristallinen Materialien entweder mit einer positiven oder mit einer negativen Dielektrizitätsanisotropie (Δε ≠ 0) betrieben werden. Mit den bisher bekannten Materialien werden in IPS-Anzeigen jedoch relativ hohe Schwellspannungen und lange Schaltzeiten erzielt. Außerdem kann bei IPS-Anzeigen mit bisher bekannten Materialien das Problem der Kristallisation des Flüssigkristallmediums bei tiefen Temperaturen auftreten.

Ein weitere vielversprechende Art von Flüssigkristallanzeigen sind die sogenannten "Axially Symmetric Microdomain"- (kurz ASM) Anzeigen, die bevorzugt mittels Plasmaarrays angesteuert werden (PA LCDs, von "Plasma Addressed Liquid Crystal Displays").

Die oben beschriebenen Anzeigen können vom Aktivmatrix- oder Passivmatrix-(Multiplex-)Typ sein. So wurden beispielsweise ECB- und VA-Anzeigen beschrieben, die als Aktivmatrix- oder Multiplex-Anzeigen betrieben werden, während CSH-Anzeigen üblicherweise als Multiplex-Anzeigen betrieben werden.

Matrix-Flüssigkristallanzeigen sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor) oder andere Dioden auf Silizium-Wafer als Substrat.
2. Dünnfilm-Transistoren ("thin film transistors", TFT) auf einer Glasplatte als Substrat.

Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet. Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, daß je ein Filterelement einem schaltbaren Bildelement gegenüber liegt. TFT-Anzeigen sind üblicherweise von hinten beleuchtet.

Der Begriff MFK-Anzeigen umfaßt hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays für Rechneranwendungen (Laptop) und im Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige und es kann das Problem der "after image elimination" auftreten. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig für Anzeigen, die akzeptable Widerstandswerte über eine lange Betriebsdauer aufweisen müssen.

Weiterhin ist es wichtig, daß der spezifische Widerstand eine möglichst geringe Abnahme bei steigender Temperatur sowie nach Temperatur- und/oder UV-Belastung zeigt. Besonders nachteilig sind auch die Tieftemperatureigenschaften der Mischungen aus dem Stand der Technik. Gefordert wird, daß auch bei tiefen Temperaturen keine Kristallisation und/oder smektische Phasen auftreten und die Temperaturabhängigkeit der Viskosität möglichst gering ist. Die MFK-Anzeigen aus dem Stand der Technik genügen somit nicht den heutigen Anforderungen.

Für die technische Anwendung der oben beschriebenen Effekte in elektrooptischen Anzeigeelementen werden FK-Phasen benötigt, die einer Vielzahl von Anforderungen genügen müssen. Besonders wichtig sind hier die chemische Beständigkeit gegenüber Feuchtigkeit, Luft und physikalischen Einflüssen wie Wärme, Strahlung im infraroten, sichtbaren und ultravioletten Bereich wie elektrische Gleich- und Wechselfelder.

Ferner wird von technisch verwendbaren FK-Phasen eine flüssigkristalline Mesophase in einem geeigneten Temperaturbereich und eine niedrige Viskosität gefordert.

In keiner der bisher bekannten Reihen von Verbindungen mit flüssigkristalliner Mesophase gibt es eine Einzelverbindung, die allen diesen Erfordernissen entspricht. Es werden daher in der Regel Mischungen von 2 bis 25, vorzugsweise 3 bis 18 Verbindungen hergestellt, um als FK-Phasen verwendbare Substanzen zu erhalten. Optimale Phasen konnten jedoch auf diese Weise nicht leicht hergestellt werden, da Flüssigkristallmaterialien mit deutlich negativer dielektrischer Anisotropie bisher nicht in ausreichendem Maße zur Verfügung standen.

Aus EP 0 474 062 sind MFK-Anzeigen basierend auf dem ECB-Effekt bekannt. Die dort beschriebenen FK-Mischungen basierend auf 2,3-Difluorphenyl-Derivaten, welche eine Ester-, Ether- oder Ethylbrücke enthalten, weisen allerdings niedrige Werte der "voltage holding ratio" (HR) nach UV-Belastung auf. Sie sind daher für eine Anwendung in den oben beschriebenen Anzeigen schlecht geeignet.

Es besteht somit immer noch ein großer Bedarf nach MFK-Anzeigen, insbesondere vom ECB-, VA-, CSH-, IPS-, ASM- und PALC-Typ, mit sehr hohem spezifischen Widerstand bei gleichzeitig großem Arbeitstemperaturbereich, kurzen Schaltzeiten auch bei tiefen Temperaturen und niedriger Schwellenspannung, die eine Vielzahl von Graustufen, hohen Kontrast und weiten Blickwinkel ermöglichen und die oben beschriebenen Nachteile nicht oder nur in geringem Maße zeigen.

Der Erfindung lag die Aufgabe zugrunde, MFK-Anzeigen bereitzustellen, die die oben angegebenen Nachteile nicht oder nur in geringerem Maße aufweisen, und vorzugsweise gleichzeitig sehr hohe spezifische Widerstände und niedrige Schwellenspannungen besitzen.

Es wurde nun gefunden, daß diese Aufgabe gelöst werden kann, wenn man in FK-Anzeigen erfindungsgemäße Medien verwendet.

Gegenstand der Erfindung ist somit ein flüssigkristallines Medium, dadurch gekennzeichnet, daß es eine oder mehrere Verbindungen der Formel I 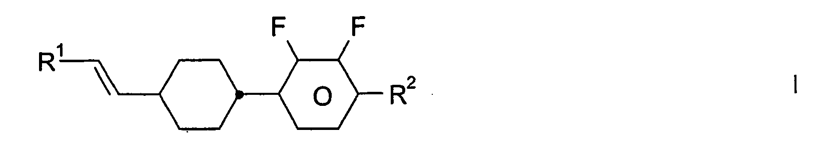 und eine oder mehrere Verbindungen der Formel II 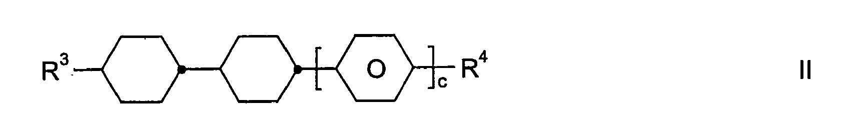 enthält, worin
- R¹: H oder Alkyl mit 1 bis 5 C-Atomen,
- R²: Alkoxy mit 1 bis 12 C-Atomen,
- R³: Alkenyl mit 2 bis 7 C-Atomen,
- R⁴: Alkyl mit 1 bis 12 C-Atomen, wobei auch ein oder zwei nicht benachbarte CH₂-Gruppen durch -O-, -CH=CH-, -CO-, -OCO- oder-COO- so ersetzt sein können, daß O-Atome nicht direkt miteinander verknüpft sind, und
- c: 0 oder 1
bedeuten.

Ein weiterer Gegenstand der Erfindung ist ein flüssigkristallines Medium auf der Basis eines Gemisches von polaren Verbindungen mit negativer dielektrischer Anisotropie, dadurch gekennzeichnet, daß es eine oder mehrere Verbindungen der Formel I und eine oder mehrere Verbindungen der Formel II enthält.

Ein weiterer Gegenstand der Erfindung ist eine elektrooptische Anzeige mit einer Aktivmatrix-Addressierung, insbesondere eine Anzeige basierend auf dem DAP-, ECB-, VA-, CSH-, IPS-, ASM- oder PALC-Effekt, dadurch gekennzeichnet, daß sie als Dielektrikum ein flüssigkristallines Medium nach Anspruch 1 enthält.

In den Verbindungen der Formel I ist R¹ vorzugsweise H, oder geradkettiges Alkyl mit 1 bis 4 C-Atomen, insbesondere H, Methyl, Ethyl oder n-Propyl, ganz besonders bevorzugt H oder Methyl. R² ist vorzusgweise geradkettiges Alkoxy mit 1 bis 6 C-Atomen, insbesondere Methoxy, Ethoxy, n-Propoxy oder n-Butoxy.

Die Verbindungen der Formel II sind vorzugsweise ausgewählt aus den folgenden Formeln 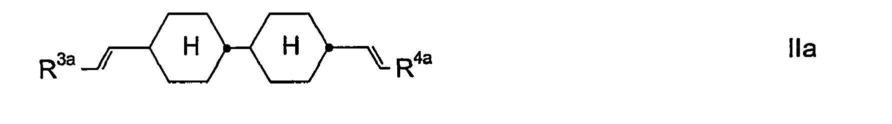 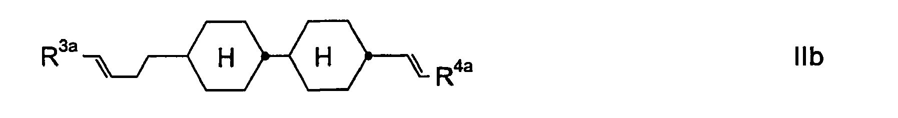 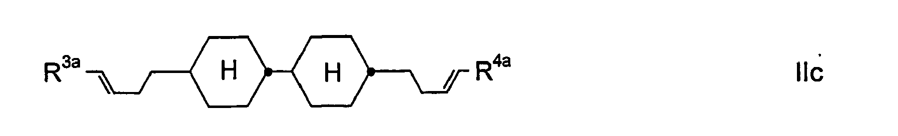 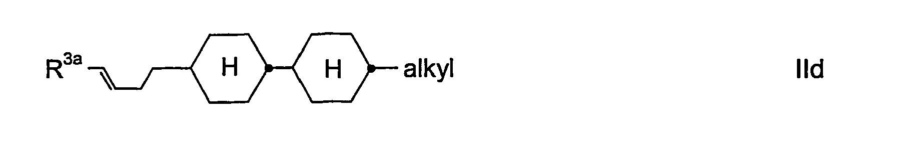 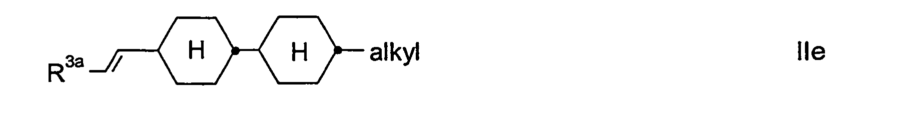 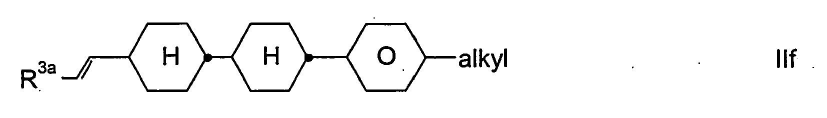 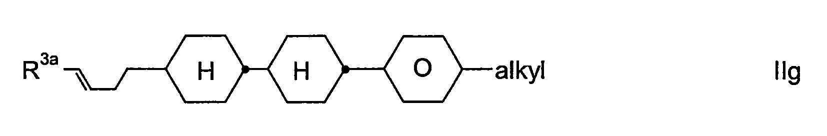 worin R^{3a} und R^{4a} jeweils unabhängig voneinander H, Methyl, Ethyl oder n-Propyl und alkyl C₁₋₆-alkyl bedeuten.

Besonders bevorzugt sind Verbindungen der Formel IIa, IId, IIe und IIg, insbesondere solche der Formel IIe und IIg, worin R^{3a} H oder Methyl ist.

Die erfindungsgemäßen Medien zeigen sehr hohe HR-Werte, niedrige Schwellenspannungen und sehr gute Tieftemperaturstabilitäten bei gleichzeitig hohen Klärpunkten. Insbesondere zeigen sie eine im Vergleich zu den Medien aus dem Stand der Technik deutlich verringerte Rotationsviskosität.

Einige bevorzugte Ausführungsformen werden im folgenden genannt:
a) Medium, welches zusätzlich eine oder mehrere Verbindungen der Formel III enthält: 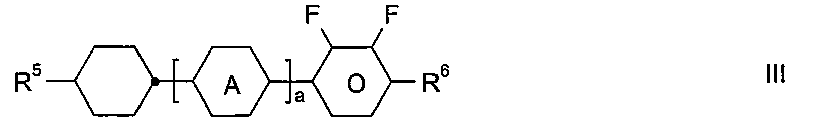 worin
   - R⁵ und R⁶: Alkyl mit 1 bis 12 C-Atomen, wobei auch ein oder zwei nicht benachbarte CH₂-Gruppen durch -O-, -CH=CH-,-CO-, -OCO- oder -COO- so ersetzt sein können, 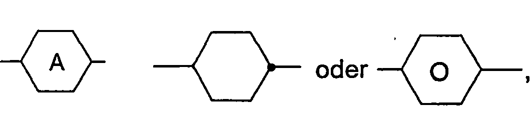 und
   - a: 0 oder 1 bedeuten.
b) Medium, welches zusätzlich eine oder mehrere Verbindungen der Formel IV enthält: 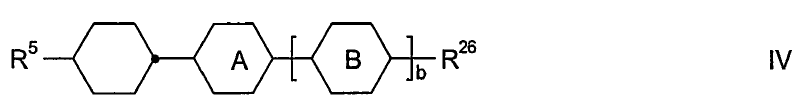 worin
   - R⁵ und R⁶: unabhängig voneinander eine der in Formel III angegebenen Bedeutungen haben, 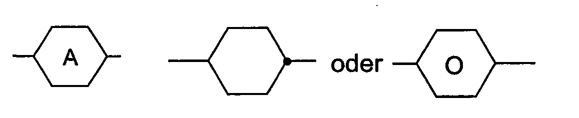 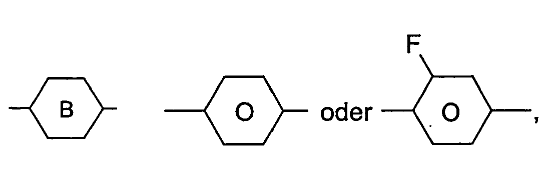 und
   - b: 0 oder 1 bedeuten.
c) Medium, worin die Verbindungen der Formel III ausgewählt sind aus den folgenden Formeln: 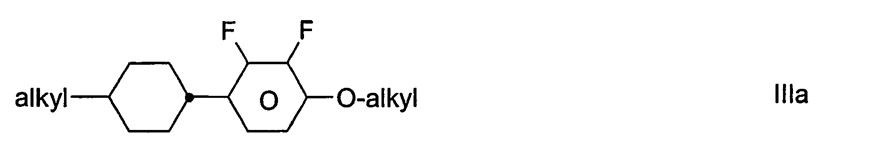 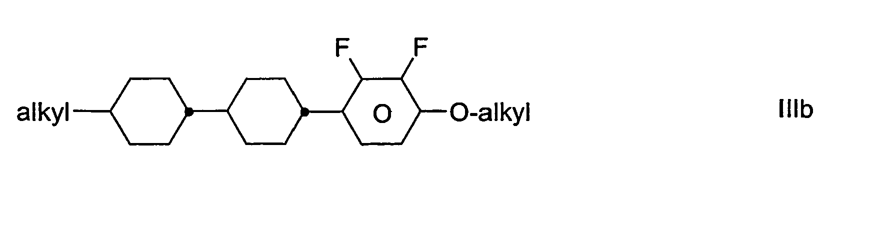 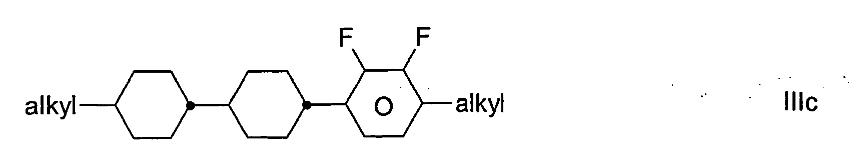 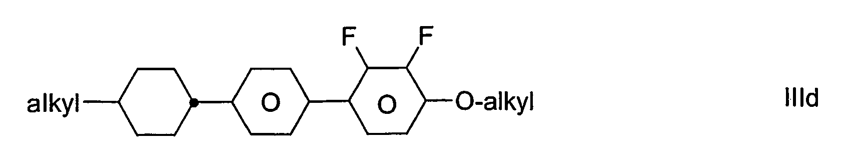 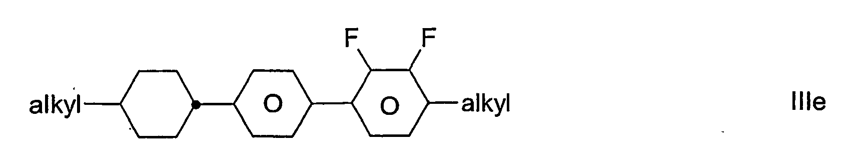 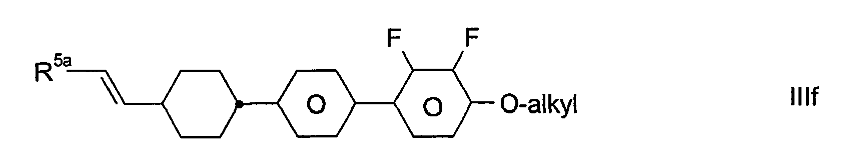 worin alkyl C₁₋₆-alkyl und R^{5a} H, Methyl, Ethyl oder n-Propyl, insbesondere H oder Methyl bedeutet. Besonders bevorzugt sind Verbindungen der Formel IIIa, IIIb, IIIc, IIId und IIIf.
d) Medium, worin die Verbindungen der Formel IV ausgewählt sind aus den folgenden Formeln: 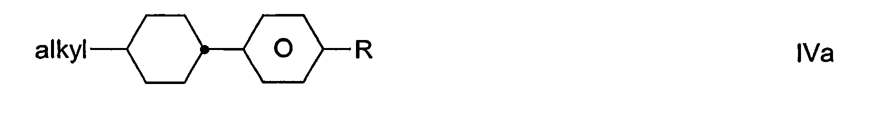 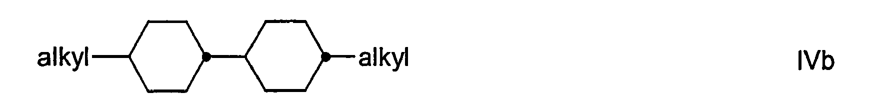 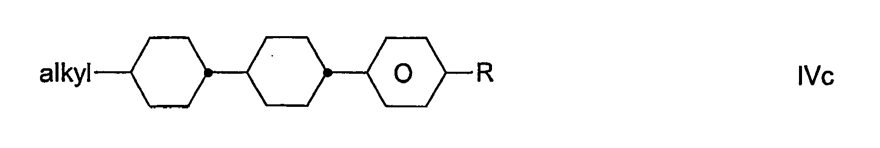 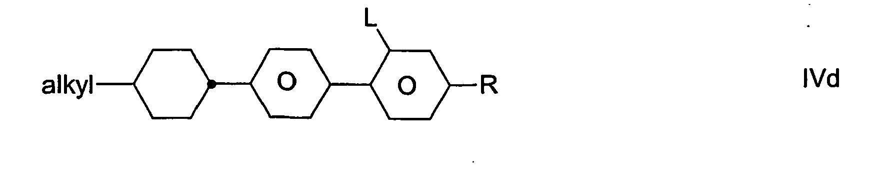 worin alkyl C₁₋₆-alkyl, R C₁₋₆alkyl oder -alkoxy und L H oder F bedeuten.
e) Medium, welches zusätzlich eine oder mehrere Verbindungen ausgewählt aus den Formeln Va bis Vd enthält: 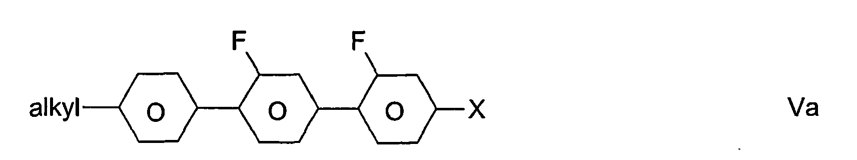 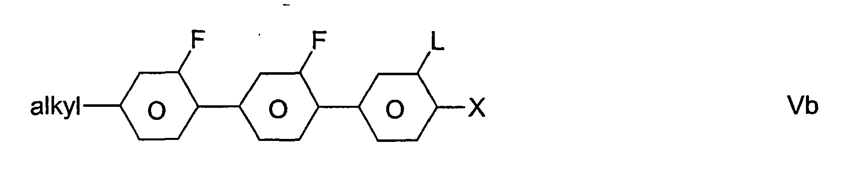 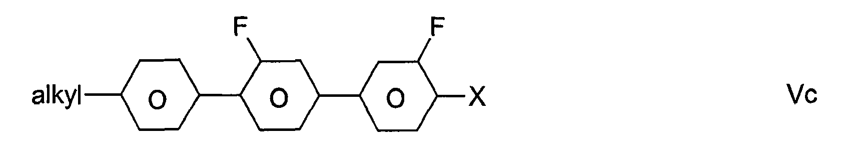 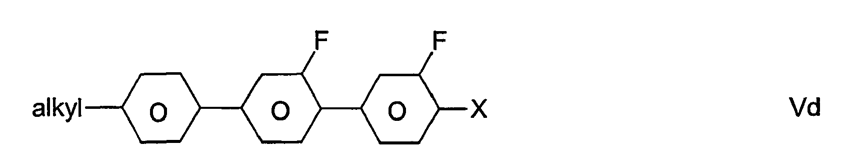 worin alkyl C₁₋₆-alkyl, L H oder F und X F oder Cl bedeuten. Besonders bevorzugt sind Verbindungen der Formel Va, worin X F bedeutet.
f) Medium, welches zusätzlich eine oder mehrere Verbindungen ausgewählt aus den Formeln VIa und Vlb enthält: 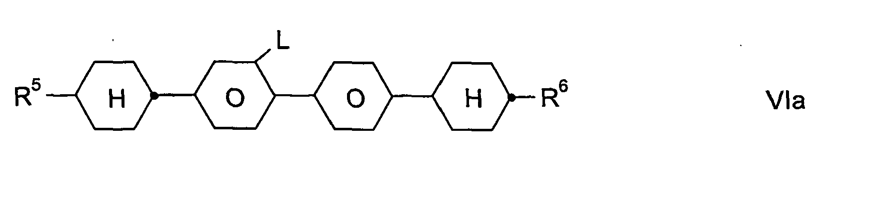 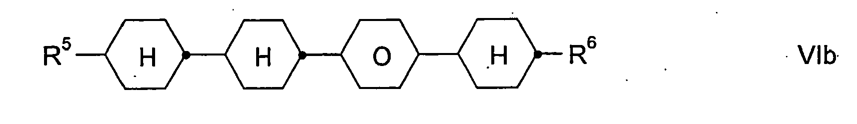 worin R⁵ und R⁶ die in Formel III angegebene Bedeutung besitzen und L H oder F bedeutet. R⁵ und R⁶ sind in diesen Verbindungen besonders bevorzugt C₁₋₆-alkyl oder -alkoxy.
g) Medium, welches zusätzlich eine oder mehrere Verbindungen ausgewählt aus den folgenden Formeln enthält: 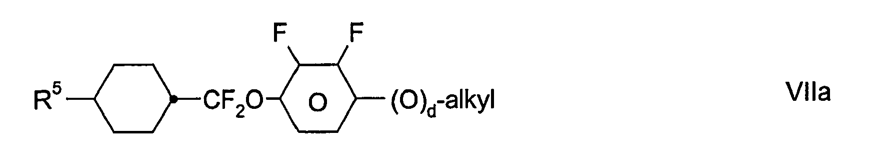 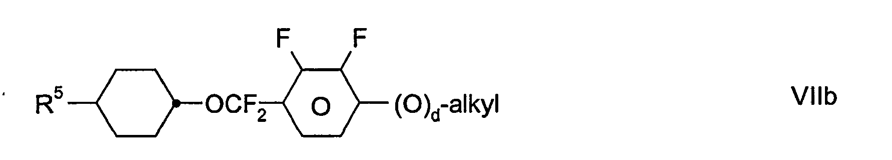 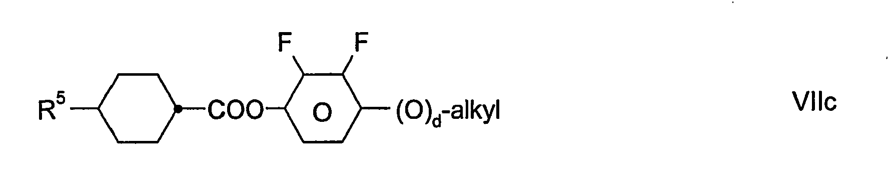 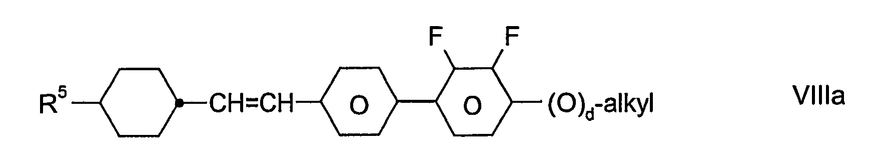 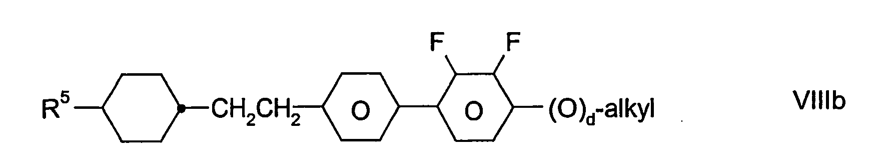 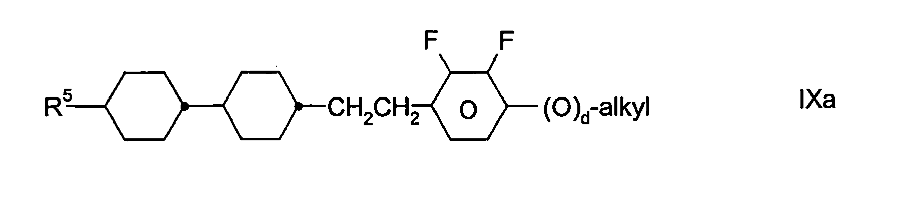 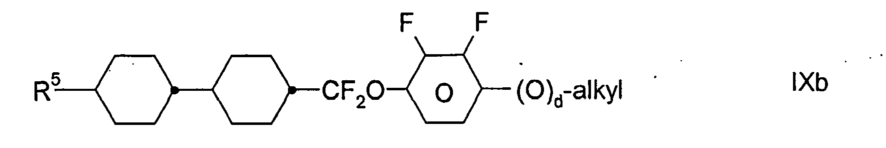 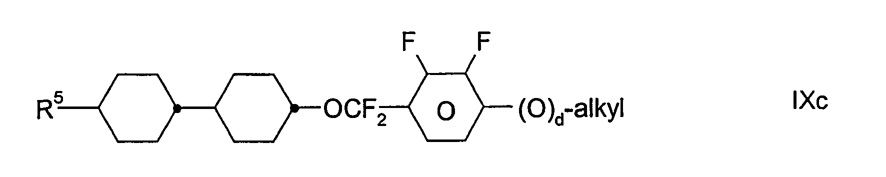 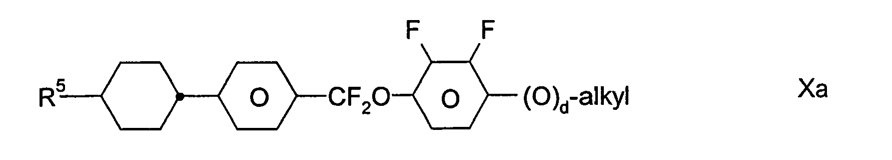 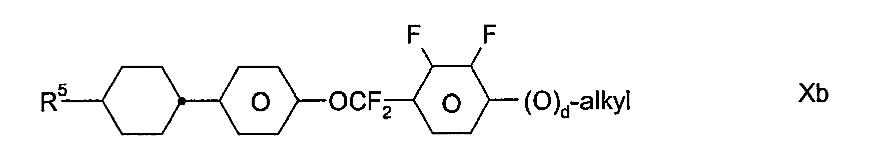 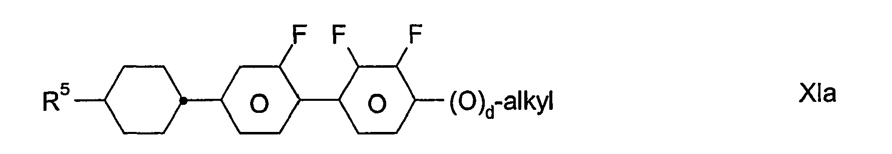 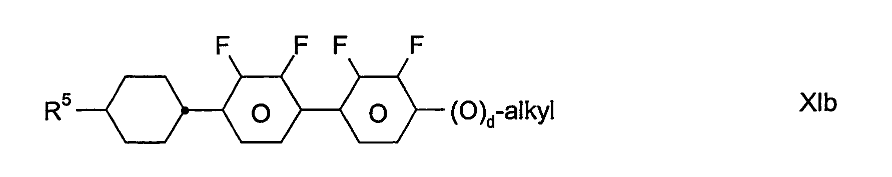 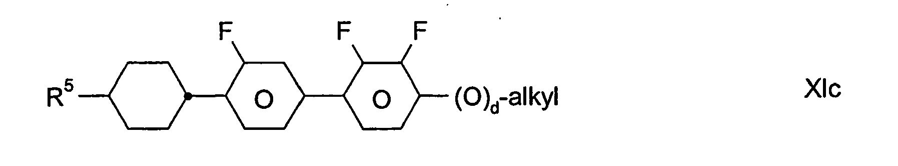 worin R⁵ und alkyl die oben angegebenen Bedeutungen besitzen und d 0 oder 1 bedeutet. R⁵ ist in diesen Verbindungen besonders bevorzugt C₁₋₆-alkyl oder -alkoxy, d ist vorzugsweise 1. Besonders bevorzugt sind Verbindungen der Formel VIIc, IXb und Xb.
h) Medium, welches zusätzlich eine oder mehrere Verbindungen der Formel XII enthält: 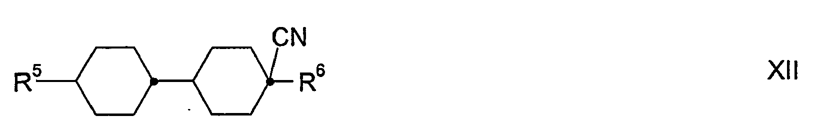 worin R⁵ und R⁶ die in Formel III angegebenen Bedeutungen besitzen und vorzugsweise Alkyl mit 1 bis 8 C-Atomen bedeuten.
i) Medium, welches zusätzlich eine oder mehrere Verbindungen der Formel XIII enthält: 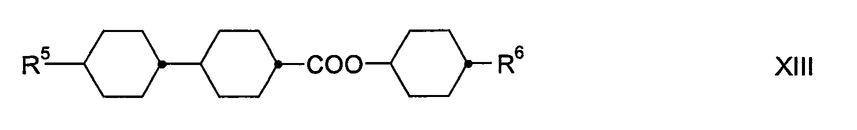 worin R⁵ und R⁶ die in Formel III angegebenen Bedeutungen besitzen und vorzugsweise Alkyl mit 1 bis 8 C-Atomen bedeuten.
k) Medium, welches zusätzlich eine oder mehrere Verbindungen ausgewählt aus den folgenden Formeln enthält 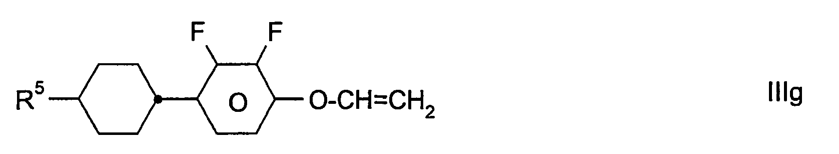 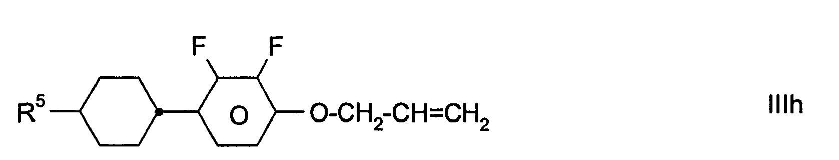 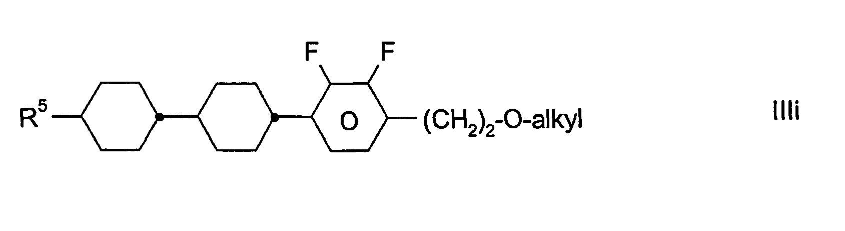 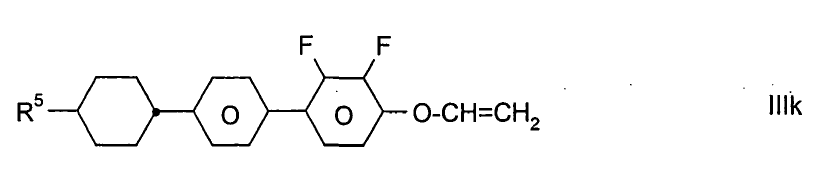 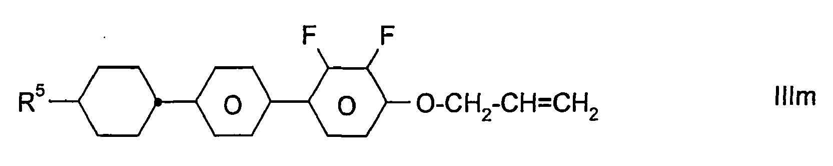 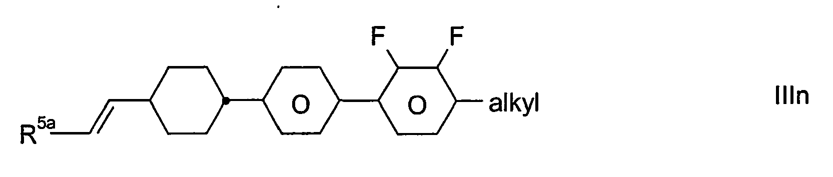 worin R⁵, R^{5a} und alkyl die oben angegebenen Bedeutungen besitzen. R⁵ ist in diesen Verbindungen besonders bevorzugt C₁₋₆-alkyl oder -alkoxy.
l) Medium, welches 1 bis 4, vorzugsweise 1 oder 2 Verbindungen der Formel I und 1 bis 6, vorzugsweise 1, 2, 3 oder 4 Verbindungen der Formel II enthält.
m) Medium, welches im wesentlichen aus 1 bis 4 Verbindungen der Formel I, 1 bis 6 Verbindungen der Formel II, 1 bis 10 Verbindungen der Formel III und 1 bis fünf Verbindungen der Formel IV besteht.
n) Medium, worin der Anteil an Verbindungen der Formel I im Gesamtgemisch 5 bis 35 %, vorzugsweise 9 bis 25 % beträgt.
n) Medium, worin der Anteil an Verbindungen der Formel II im Gesamtgemisch 5 bis 50 %, vorzugsweise 10 bis 36 % beträgt.
o) Medium, welches im wesentlichen aus
   5-35 % einer oder mehrerer Verbindungen der Formel I,
   5-50 % einer oder mehrerer Verbindungen der Formel II,
   25-70 % einer oder mehrerer Verbindungen der Formel III, und
   2-25 % einer oder mehrerer Verbindungen der Formel IV besteht.

Vorzugsweise weist die Flüssigkristallmischung einen nematischen Phasenbereich von mindestens 80 K, besonders bevorzugt von mindestens 100 K und eine Rotationsviskosität von nicht mehr als 290, vorzugsweise nicht mehr als 250 mPa·s.

Die erfindungsgemäße Flüssigkristallmischung weist eine dielektrische Anisotropie Δε von etwa -0,5 bis -7,5 , insbesondere von etwa -2,8 bis -5,5 bei 20 °C und 1 kHz auf.

Die Doppelbrechung Δn in der Flüssigkristallmischung liegt vorzugsweise unter 0,15, insbesondere zwischen 0,06 und 0,14, besonders bevorzugt zwischen 0,07 und 0,12. Die Dielektrizitätskonstante ε_{∥} ist in der Regel größer oder gleich 3, vorzugsweise 3 bis 5.

Die Dielektrika können auch weitere, dem Fachmann bekannte und in der Literatur beschriebene Zusätze enthalten. Beispielsweise können 0-15 Gew.-% pleochroitische Farbstoffe zugesetzt werden, femer Leitsalze, vorzugsweise Ethyl-dimethyldodecylammonium-4-hexoxybenzoat, Tetrabutylammoniumtetraphenylborat oder Komplexsalze von Kronenethem (vgl. z.B. Haller et al., Mol. Cryst. Liq. Cryst. 24, 249-258 (1973)) zur Verbesserung der Leitfähigkeit, oder Substanzen zur Veränderung der dielektrischen Anisotropie, der Viskosität und/oder der Orientierung der nematischen Phasen. Derartige Substanzen sind z.B. in DE-A 22 09 127, 22 40 864, 23 21 632, 23 38 281, 24 50 088, 26 37 430 und 28 53 728 beschrieben.

Die einzelnen Komponenten der Formel I, II, III und IV der erfindungsgemäßen Flüssigkristallmischungen sind entweder bekannt, oder ihre Herstellungsweisen sind für den einschlägigen Fachmann aus dem Stand der Technik ohne weiteres abzuleiten, da sie auf in der Literatur beschriebenen Standardverfahren basieren.

Entsprechende Verbindungen der Formel I und III werden beispielsweise in EP 0 364 538 beschrieben.

Entsprechende Verbindungen der Formel II werden beispielsweise in EP 0 122 389 DE 26 36 684 und DE 33 21 373 beschrieben.

Der Begriff "Alkenyl" in Formel II bis IV beinhaltet geradkettiges und verzweigtes Alkenyl mit bis zu 12, vorzugsweise mit 2 bis 7 C-Atomen. Geradkettige Alkenylgruppen sind bevorzugt. Ferner bevorzugt sind C₂-C₇-1E-Alkenyl, C₄-C₇-3E-Alkenyl, C₅-C₇-4-Alkenyl, C₆-C₇-5-Alkenyl and C₇-6-Alkenyl, insbesondere C₂-C₇-1 E-Alkenyl, C₄-C₇-3E-Alkenyl und C₅-C₇-4-Alkenyl.

Von diesen Gruppen besonders bevorzugt sind Vinyl, 1 E-Propenyl, 1 E-Butenyl, 1E-Pentenyl, 1E-Hexenyl, 1E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl und 6-Heptenyl. Alkenylgruppen mit bis zu 5 C-Atomen sind besonders bevorzugt.

Die nematischen Flüssigkristallmischungen in den erfindungsgemäßen Anzeigen enthalten in der Regel zwei Komponenten A und B, die ihrerseits aus einer oder mehreren Einzelverbindungen bestehen.

Die Komponente A weist eine deutlich negative dielektrische Anisotropie auf und verleiht der nematischen Phase eine dielektrische Anisotropie von ≤ -0,3. Sie enthält bevorzugt Verbindungen der Formeln I und III.

Der Anteil der Komponente A liegt vorzugsweise zwischen 45 und 100 Gew.-%, insbesondere zwischen 60 und 90 Gew.-%.

Für Komponente A werden vorzugsweise eine oder mehrere Einzelverbindungen gewählt, die einen Wert von Δε ≤ -0,8 haben. Dieser Wert muß umso negativer sein, je kleiner der Anteil von Komponente A an der Gesamtmischung ist.

Die Komponente B weist eine ausgeprägte Nematogenität und eine Rotationsviskosität von nicht mehr als 250 mPa·s auf.

Komponente B ist monotrop oder enantiotrop nematisch, weist keine smektischen Phasen auf und kann in Flüssigkristallmischungen das Auftreten von smektischen Phasen bis zu sehr tiefen Temperaturen verhindern. Versetzt man beispielsweise eine smektische Flüssigkristallmischung mit jeweils verschiedenen Materialien mit hoher Nematogenität, so kann durch den erzielten Grad der Unterdrückung smektischer Phasen die Nematogenität dieser Materialien verglichen werden. Dem Fachmann sind aus der Literatur eine Vielzahl geeigneter Materialien bekannt. Besonders bevorzugt sind Verbindungen der Formel II.

Vorzugsweise enthalten die erfindungsgemäßen Flüssigkristallmischungen 4 bis 25, insbesondere 6 bis 18 Verbindungen der Formeln I, II, III und IV.

Neben den Verbindungen der Formeln I, II, III und IV können auch noch andere Bestandteile zugegen sein, z.B. in einer Menge von bis zu 45 Gew.-% der Gesamtmischung, vorzugsweise jedoch bis zu maximal 35 Gew.-%, insbesondere bis zu maximal 10 Gew.-%.

Die anderen Bestandteile werden vorzugsweise ausgewählt aus den nematischen oder nematogenen Substanzen, insbesondere den bekannten Substanzen aus den Klassen der Azoxybenzole, Benzylidenaniline, Biphenyle, Terphenyle, Phenyl oder Cyclohexylbenzoate, Cyclohexancarbonsäurephenyl oder -cyclohexylester, Phenylcyclohexane, Cyclohexylbiphenyle, Cyclohexylcyclohexane, Cyclohexylnaphthaline, 1,4-Bis-cyclohexylbiphenyle oder Cyclohexylpyrimidine, Phenyl- oder Cyclohexyldioxane, gegebenenfalls halogenierten Stilbene, Benzylphenylether, Tolane und substituierten Zimtsäuren.

Die wichtigsten als Bestandteile derartiger Flüssigkristallmischungen in Frage kommenden Verbindungen lassen sich durch die Formel XV charakterisieren

R⁸-L-G-E-R⁹ XV

worin
- L und E: jeweils ein carbo- oder heterocyclisches Ringsystem aus der aus 1,4-disubstituierten Benzol- und Cyclohexanringen, 4,4'-disubstituierten Biphenyl-, Phenylcyclohexan- und Cyclohexylcyclohexansystemen, 2,5-disubstituierten Pyrimidin- und 1,3-Dioxanringen, 2,6-disubstituierten Naphthalin, Di- und Tetrahydronaphthalin, Chinazolin und Tetrahydrochinazolin gebildeten Gruppe,
- G: -CH=CH- -N(O)=N-

-CH-CQ- -CH=N(O)-

-C≡C- -CH₂-CH₂-

-CO-O- -CH₂-O-

-CO-S- -CH₂-S-

-CH=N- -COO-Phe-COO-

oder eine C-C-Einfachbindung,
- Q: Halogen, vorzugsweise Chlor, oder CN, und
- R⁸ und R⁹: jeweils unabhängig voneinander Alkyl, Alkoxy, Alkanoyloxy oder Alkoxycarbonyloxy mit bis zu 18, vorzugsweise bis zu 8 C-Atomen, oder einer dieser Reste auch CN, NC, NO₂, CF₃, F, Cl oder Br
bedeuten.

Bei den meisten dieser Verbindungen sind R³ und R⁹ voneinander verschieden, wobei einer dieser Reste meist eine Alkyl- oder Alkoxygruppe ist. Auch andere Varianten der vorgesehenen Substituenten sind gebräuchlich. Viele solcher Substanzen oder auch Gemische davon sind im Handel erhältlich. Alle diese Substanzen sind nach literaturbekannten Methoden herstellbar.

Es versteht sich für den Fachmann von selbst, daß die erfindungsgemäße FK-Mischung auch Verbindungen enthalten kann, worin beispielsweise H, N, O, Cl, F durch die entsprechenden lsotope ersetzt sind.

Der Aufbau der erfindungsgemäßen Flüssigkristallanzeigen entspricht der üblichen Geometrie, wie sie z.B. in EP-A 0 240 379 beschrieben wird.

Die folgenden Beispiele sollen die Erfindung erläutern, ohne sie zu begrenzen. Vor- und nachstehend bedeuten Prozentangaben Gewichtsprozent, sofern nicht anders angegeben; alle Temperaturen sind in Grad Celsius angegeben.

Folgende Abkürzungen werden verwendet:

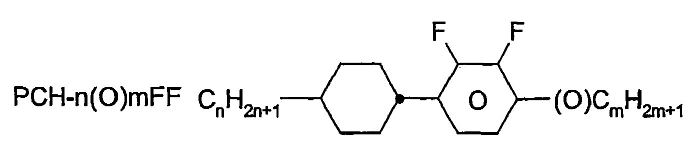

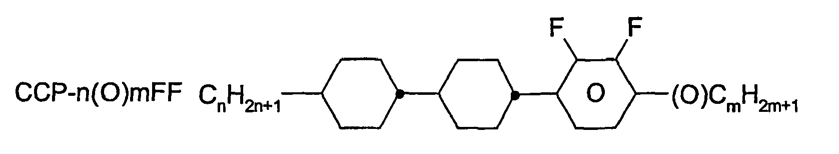

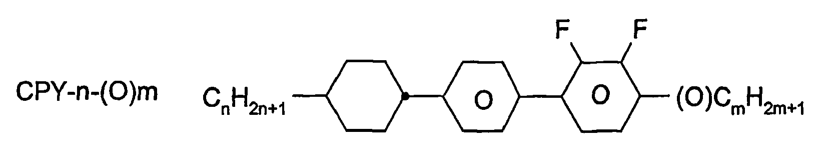

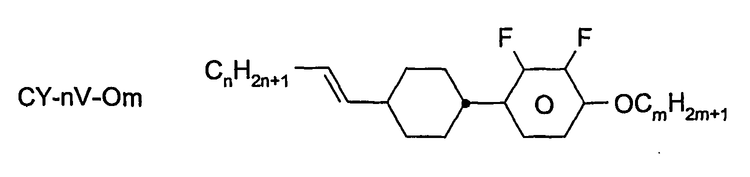

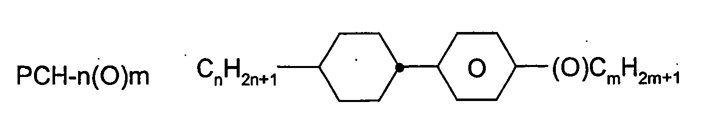

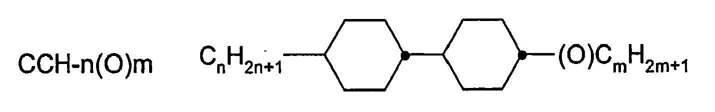

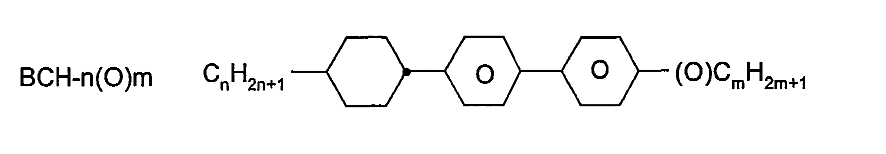

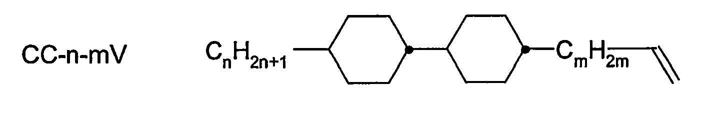

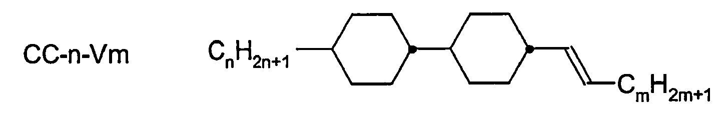

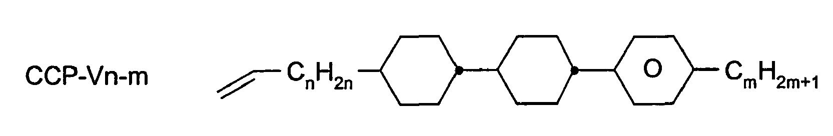

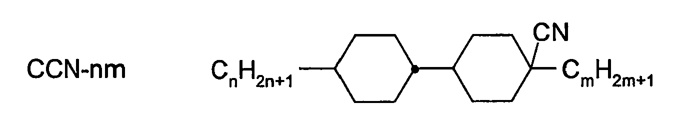

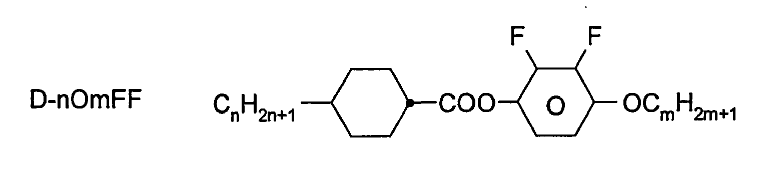

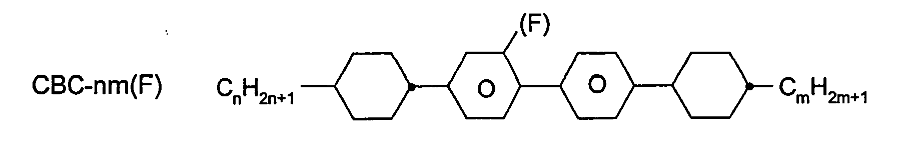

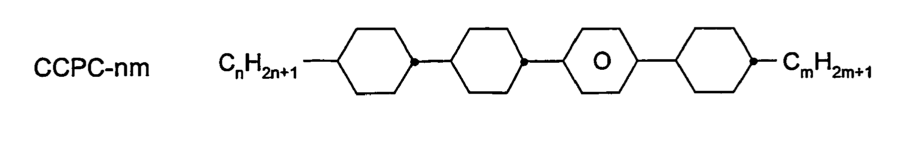

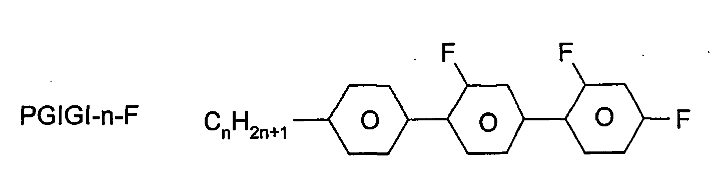

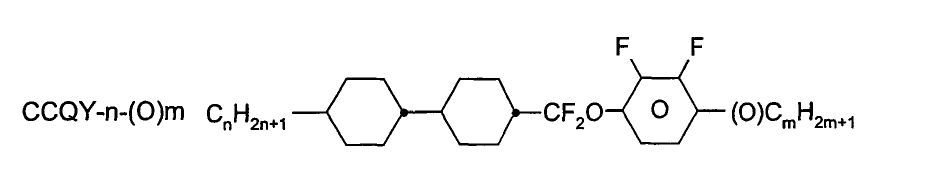

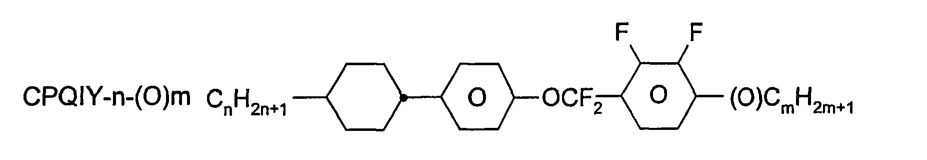

Weiterhin bedeuten:
- Kp: Klärpunkt [°C]
- Δn: optische Anisotropie (Doppelbrechung) bei 20 °C und 589 nm
- Δε: dielektrische Anisotropie bei 20 °C und 1 kHz
- ε_{∥}: Dielektrizitätskonstante parallel zum Direktor bei 20 °C und 1 kHz
- K₃/K₁: Verhältnis der elastischen Konstanten K₃ und K₁
- γ₁: Rotationsviskosität [mPa·s] (bei 20 °C, sofern nicht anders angegeben)
- V₀: kapazitive Schwellenspannung [V]
- LTS: Tieftemperaturstabilität der nematischen Phase (nem.) in Testzellen (bei T in °C)

Die zur Messung der kapazitiven Schwellenspannung verwendete Anzeige weist zwei planparallele Trägerplatten im Abstand von 20 µm und Elektrodenschichten mit darüberliegenden Orientierungsschichten aus Lecithin auf den Innenseiten der Trägerplatten auf, welche eine homöotrope Randorientierung der Flüssigkristallmoleküle bewirken.

### Beispiel 1

Eine Flüssigkristallanzeige enthaltend

| | | | |
|---|---|---|---|
| PCH-304FF | 8.00 % | Kp. | + 70,0 |
| PCH-504FF | 20.00 % | Δn | 0,1023 |
| CY-V-04 | 10.00 % | Δε | - 4,1 |
| CCP-302FF | 7.00 % | ε_{∥} | 3,8 |
| BCH-32 | 7.00 % | K₃/K₁ | 1,03 |
| CCH-35 | 5.00 % | γ₁ | 137 |
| CC-3-V1 | 8.00 % | V₀ | 1,90 |
| CC-5-V | 11.00 % | LTS | nem.>1000 h (-30) |
| CPY-2-02 | 12.00 % | | |
| CPY-3-02 | 12.00 % | | |

### Beispiel 2

Eine Flüssigkristallanzeige enthaltend

| | | | |
|---|---|---|---|
| PCH-304FF | 8.00 % | Kp. | + 70,5 |
| PCH-504FF | 20.00 % | Δn | 0,1025 |
| CY-V-04 | 5.00 % | Δε | - 4,0 |
| CY-V-02 | 5.00 % | ε_{∥} | 3,8 |
| CCP-302FF | 7.00 % | K₃/K₁ | 1,01 |
| BCH-32 | 7.00 % | γ₁ | 136 |
| CCH-35 | 5.00 % | V₀ | 1,90 |
| CC-3-V1 | 8.00 % | LTS | nem.>1000 h (-40) |
| CC-5-V | 11.00% | | |
| CPY-2-02 | 12.00 % | | |
| CPY-3-02 | 12.00 % | | |

### Vergleichsbeispiel 1

Eine Flüssigkristallanzeige enthaltend

| | | | |
|---|---|---|---|
| PCH-304FF | 19.00 % | Kp. | + 71,0 |
| PCH-504FF | 20.00 % | Δn | 0,1020 |
| CCP-302FF | 6.00 % | Δε | - 3,9 |
| BCH-32 | 7.00 % | ε_{∥} | 3,7 |
| CCH-35 | 5.00 % | K₃/K₁ | 1,02 |
| CC-3-V1 | 8.00 % | γ₁ | 142 |
| CC-5-V | 11.00 % | V₀ | 1,92 |
| CPY-2-02 | 12.00 % | | |
| CPY-3-02 | 12.00 % | | |

weist gegenüber Beispiel 1 und 2 eine höhere Rotationsviskosität auf.

### Beispiel 3

Eine Flüssigkristallanzeige enthaltend

| | | | |
|---|---|---|---|
| PCH-502FF | 6.00 % | Kp. | + 70,0 |
| PCH-504FF | 14.00 % | Δn | 0,0891 |
| CY-V-04 | 7.00 % | Δε | - 3,3 |
| CY-V-O2 | 7.00 % | ε_{∥} | 3,6 |
| CCP-302FF | 8.00 % | K₃/K₁ | 1,04 |
| CPY-2-02 | 9.00 % | γ₁ | 104 |
| CPY-3-02 | 8.00 % | V₀ | 2,13 |
| CCP-V2-1 | 8.00 % | LTS | nem.>1000 h (-40) |
| CCH-35 | 5.00 % | | |
| CC-3-V1 | 9.00 % | | |
| CC-5-V | 19.00 % | | |

### Beispiel 4

Eine Flüssigkristallanzeige enthaltend

| | | | |
|---|---|---|---|
| PCH-502FF | 6.00 % | Kp. | + 70,2 |
| PCH-504FF | 10.00 % | Δn | 0,0906 |
| CY-V-04 | 9.00 % | Δε | - 3,4 |
| CY-V-02 | 9.00 % | ε_{∥} | 3,6 |
| CCP-302FF | 9.00% | K₃/K₁ | 1,06 |
| CPY-2-02 | 8.00 % | γ₁ | 104 |
| CPY-3-02 | 9.00 % | V₀ | 2,10 |
| CCP-V2-1 | 8.00 % | LTS | nem.>1000 h (-40) |
| CCH-35 | 5.00 % | | |
| CC-3-V1 | 9.00 % | | |
| CC-5-V | 18.00 % | | |

### Vergleichsbeispiel 2

Eine Flüssigkristallanzeige enthaltend

| | | | |
|---|---|---|---|
| PCH-304FF | 16.00 % | Kp. | + 71,0 |
| PCH-504FF | 14.00 % | Δn | 0,0822 |
| CCP-302FF | 12.00 % | Δε | - 3,8 |
| CCP-502FF | 11.00 % | ε_{∥} | 3,6 |
| CCP-21 FF | 9.00 % | K₃/K₁ | 1,08 |
| CCP-31 FF | 8.00 % | γ₁ | 135 |
| CCH-34 | 8.00 % | V₀ | 2,08 |
| CCH-35 | 9.00 % | LTS | nem.>1000 h (-20) |
| PCH-53 | 7.00 % | | |
| PCH-301 | 6.00 % | | |

weist gegenüber Beispiel 3 und 4 eine höhere Rotationsviskosität bei niedrigerem Δn sowie eine schlechtere Tieftemperaturstabilität auf.

### Beispiel 5

Eine Flüssigkristallanzeige enthaltend

| | | | |
|---|---|---|---|
| PCH-304FF | 7.00 % | Kp. | + 75,0 |
| PCH-502FF | 10.00 % | Δn | 0,1201 |
| CY-1V-O2 | 10.00 % | Δε | - 3,7 |
| CY-1V-O4 | 9.00 % | γ₁ | 148 |
| PGIGI-3-F | 3.00 % | | |
| BCH-32 | 9.00 % | | |
| CCP-V-1 | 8.00 % | | |
| CC-3-V1 | 11.00 % | | |
| PCH-53 | 7.00 % | | |
| CPY-2-02 | 13.00 % | | |
| CPY-3-02 | 13.00 % | | |

### Vergleichsbeispiel 3

Eine Flüssigkristallanzeige enthaltend

| | | | |
|---|---|---|---|
| PCH-304FF | 20.00 % | Kp. | + 74,5 |
| PCH-502FF | 8.00 % | Δn | 0,1204 |
| PCH-504FF | 8.00 % | Δε | - 3,7 |
| PGIGI-3-F | 8.00 % | γ₁ | 160 |
| BCH-32 | 8.00 % | | |
| CCP-V-1 | 7.00 % | | |
| CC-3-V1 | 8.00 % | | |
| CC-5-V | 7.00 % | | |
| CPY-2-02 | 14.00 % | | |
| CPY-3-02 | 12.00 % | | |

weist gegenüber Beispiel 5 eine höhere Rotationsviskosität auf.

### Beispiel 6

Eine Flüssigkristallanzeige enthaltend

| | | | |
|---|---|---|---|
| PCH-304FF | 6.00 % | Kp. | + 72,0 |
| PCH-502FF | 8.00 % | Δn | 0,0959 |
| PCH-504FF | 8.00 % | Δε | - 3,4 |
| CY-1V-O4 | 10.00 % | γ₁ | 109 |
| CCQY-3-O2 | 6.00 % | | |
| CCQY-5-O2 | 6.00 % | | |
| CPY-V-O2 | 9.00 % | | |
| CPY-V-04 | 9.00 % | | |
| BCH-32 | 4.00 % | | |
| CC-3-V1 | 10.00 % | | |
| CCH-35 | 12.00 % | | |
| CC-3-V | 8.00 % | | |
| PCH-302 | 4.00 % | | |

### Vergleichsbeispiel 4

Eine Flüssigkristallanzeige enthaltend

| | | | |
|---|---|---|---|
| PCH-304FF | 16.00 % | Kp. | + 70,5 |
| PCH-502FF | 8.00 % | Δn | 0,0954 |
| PCH-504FF | 12.00 % | Δε | - 3,4 |
| CPY-3-02 | 8.00 % | γ₁ | 122 |
| CCQY-3-O2 | 5.00 % | | |
| CCQY-5-O2 | 5.00 % | | |
| CPY-2-02 | 9.00 % | | |
| BCH-32 | 8.00 % | | |
| CC-3-V1 | 8.00 % | | |
| CCH-35 | 5.00 % | | |
| CC-5-V | 16.00 % | | |

weist gegenüber Beispiel 6 eine höhere Rotationsviskosität auf.

### Beispiel 7

Eine Flüssigkristallanzeige enthaltend

| | | | |
|---|---|---|---|
| PCH-502FF | 9.00 % | Kp. | + 83,0 |
| PCH-504FF | 14.00 % | Δn | 0,1031 |
| CY-V-04 | 10.00 % | Δε | - 4,8 |
| CCP-302FF | 14.00 % | ε_{∥} | 3,7 |
| CCP-31FF | 8.00 % | K₃/K₁ | 1,10 |
| CC-3-2V | 8.00 % | γ₁ | 178 |
| CC-3-V1 | 8.00 % | V₀ | 1,93 |
| CCH-35 | 5.00 % | LTS | nem.>1000 h (-40) |
| CPY-2-02 | 12.00 % | | |
| CPY-3-02 | 12.00 % | | |

### Vergleichsbeispiel 5

Eine Flüssigkristallanzeige enthaltend

| | | | |
|---|---|---|---|
| PCH-304FF | 8.00 % | Kp. | + 83,5 |
| PCH-502FF | 8.00 % | Δn | 0,1022 |
| PCH-504FF | 18.00 % | Δε | - 4,9 |
| CCP-302FF | 14.00 % | ε_{∥} | 3,8 |
| CCP-31 FF | 7.00 % | K₃/K₁ | 1,05 |
| CC-5-V | 8.00 % | γ₁ | 189 |
| CC-3-V1 | 8.00 % | V₀ | 1,93 |
| CCH-35 | 5.00 % | LTS | nem.>1000 h (-40) |
| CPY-2-02 | 12.00 % | | |
| CPY-3-02 | 12.00 % | | |

weist gegenüber Beispiel 7 eine höhere Rotationsviskosität auf.

### Beispiel 8

Eine Flüssigkristallanzeige enthaltend

| | | | |
|---|---|---|---|
| PCH-304FF | 10.00 % | Kp. | + 106,0 |
| PCH-504FF | 3.00 % | Δn | 0,1043 |
| CY-1V-04 | 9.00 % | Δε | - 4,7 |
| CY-1V-O2 | 9.00 % | γ₁ | 287 |
| CCP-202FF | 5.00 % | | |
| CCP-302FF | 9.00 % | | |
| CCP-502FF | 9.00 % | | |
| CCP-21 FF | 7.00 % | | |
| CCP-31 FF | 8.00 % | | |
| CCY-20-1 | 4.00 % | | |
| CCY-4O-1 | 7.00 % | | |
| BCH-32 | 3.00 % | | |
| CCP-V-1 | 10.00 % | | |
| CBC-33F | 4.00 % | | |
| CC-3-V1 | 3.00 % | | |

### Vergleichsbeispiel 6

Eine Flüssigkristallanzeige enthaltend

| | | | |
|---|---|---|---|
| PCH-304FF | 10.00 % | Kp. | + 106,0 |
| PCH-502FF | 7.00 % | Δn | 0,1007 |
| PCH-504FF | 10.00 % | Δε | - 4,7 |
| CCP-202FF | 6.00 % | γ₁ | 315 |
| CCP-302FF | 9.00 % | | |
| CCP-502FF | 9.00 % | | |
| CCP-21 FF | 7.00 % | | |
| CCP-31 FF | 10.00 % | | |
| CCY-20-1 | 9.00 % | | |
| CCY-4O-1 | 6.00 % | | |
| BCH-32 | 3.00 % | | |
| CCP-V-1 | 8.00 % | | |
| CBC-33F | 4.00 % | | |
| CC-3-V1 | 3.00 % | | |

weist gegenüber Beispiel 8 eine höhere Rotationsviskosität auf.

### Beispiel 9

Eine Flüssigkristallanzeige enthaltend

| | | | |
|---|---|---|---|
| PCH-502FF | 10.00 % | Kp. | + 77,0 |
| PCH-504FF | 7.00 % | Δn | 0,1018 |
| CY-1V-O2 | 7.00 % | Δε | - 3,9 |
| CY-1V-O4 | 7.00 % | γ₁ | 124 |
| CCP-302FF | 6.00 % | | |
| CCP-31 FF | 5.00 % | | |
| CC-3-V1 | 10.00 % | | |
| CC-3-2V | 8.00 % | | |
| CC-5-V | 14.00 % | | |
| CPY-2-02 | 12.00 % | | |
| CPY-3-02 | 11.00 % | | |
| BCH-32 | 3.00 % | | |

### Vergleichsbeispiel 7

Eine Flüssigkristallanzeige enthaltend

| | | | |
|---|---|---|---|
| PCH-304FF | 12.00 % | Kp. | + 76,5 |
| PCH-502FF | 7.00 % | Δn | 0,0990 |
| PCH-504FF | 13.00 % | Δε | - 4,0 |
| CCP-302FF | 11.00 % | γ₁ | 138 |
| CC-3-V1 | 10.00 % | | |
| CC-5-V | 19.00 % | | |
| CPY-2-02 | 12.00 % | | |
| CPY-3-02 | 12.00 % | | |
| BCH-32 | 4.00 % | | |

weist gegenüber Beispiel 9 eine höhere Rotationsviskosität auf.

### Beispiel 10

Eine Flüssigkristallanzeige enthaltend

| | | | |
|---|---|---|---|
| PCH-304FF | 5.00 % | Kp. | + 74,5 |
| PCH-502FF | 5.00 % | Δn | 0,1102 |
| PCH-504FF | 6.00 % | Δε | - 3,2 |
| CY-1V-O2 | 10.00 % | γ₁ | 125 |
| CY-1V-O4 | 9.00 % | | |
| BCH-32 | 9.00 % | | |
| CCP-V-1 | 10.00 % | | |
| CC-5-V | 7.00 % | | |
| PCH-53 | 6.00 % | | |
| CC-3-V1 | 11.00 % | | |
| CPY-2-02 | 11.00 % | | |
| CPY-3-02 | 11.00 % | | |

### Beispiel 11

Eine Flüssigkristallanzeige enthaltend

| | | | |
|---|---|---|---|
| PCH-502FF | 10.00 % | Kp. | + 70,5 |
| PCH-504FF | 8.00 % | Δn | 0,1096 |
| CY-V-02 | 9.00 % | Δε | - 3,3 |
| CY-V-04 | 9.00 % | γ₁ | 118 |
| BCH-32 | 9.00 % | | |
| CCP-V-1 | 11.00 % | | |
| CC-5-V | 6.00 % | | |
| PCH-53 | 2.00 % | | |
| CC-3-V1 | 12.00 % | | |
| CPY-2-O2 | 12.00 % | | |
| CPY-3-02 | 12.00 % | | |

### Vergleichsbeispiel 8

Eine Flüssigkristallanzeige enthaltend

| | | | |
|---|---|---|---|
| PCH-304FF | 14.00 % | Kp. | + 70,0 |
| PCH-502FF | 8.00 % | Δn | 0,1106 |
| PCH-504FF | 14.00 % | Δε | - 3,3 |
| BCH-32 | 9.00 % | γ₁ | 135 |
| CCP-V-1 | 7.00 % | | |
| PGIGI-3-F | 3.00 % | | |
| CC-5-V | 8.00 % | | |
| PCH-53 | 5.00 % | | |
| CC-3-V1 | 8.00 % | | |
| CPY-2-02 | 12.00 % | | |
| CPY-3-02 | 12.00 % | | |

weist gegenüber Beispiel 10 und 11 eine höhere Rotationsviskosität auf.

### Beispiel 12

Eine Flüssigkristallanzeige enthaltend

| | | | |
|---|---|---|---|
| PCH-502FF | 10.00 % | Kp. | + 70,0 |
| PCH-504FF | 14.00 % | Δn | 0,1015 |
| CY-1V-02 | 8.00 % | Δε | - 4,2 |
| CY-1V-04 | 10.00 % | γ₁ | 172 |
| CPY-2-02 | 8.00 % | | |
| CPY-3-02 | 8.00 % | | |
| CCP-V-1 | 11.00 % | | |
| CCH-35 | 4.00 % | | |
| CC-3-V1 | 10.00 % | | |
| CC-5-V | 3.00 % | | |
| CPQIY-3-O4 | 7.00 % | | |
| CPQIY-5-O4 | 7.00 % | | |

### Vergleichsbeispiel 9

Eine Flüssigkristallanzeige enthaltend

| | | | |
|---|---|---|---|
| PCH-304FF | 17.00 % | Kp. | + 70,5 |
| PCH-502FF | 9.00 % | Δn | 0,0993 |
| PCH-504FF | 14.00 % | Δε | - 4,2 |
| CPY-2-02 | 7.00 % | γ₁ | 187 |
| CPY-3-02 | 7.00 % | | |
| CCP-V-1 | 12.00 % | | |
| CCH-35 | 5.00 % | | |
| CC-3-V1 | 9.00 % | | |
| CPQIY-3-O4 | 10.00 % | | |
| CPQIY-5-O4 | 10.00 % | | |

weist gegenüber Beispiel 12 eine höhere Rotationsviskosität auf.

## Patentansprüche

1. Flüssigkristallines Medium, **dadurch gekennzeichnet, daß** es eine oder mehrere Verbindungen der allgemeinen Formel I enthält 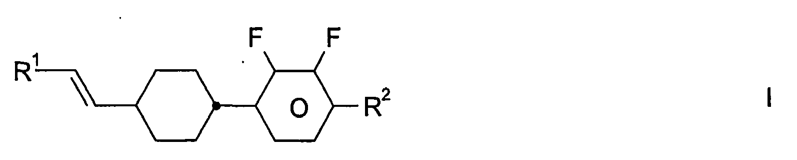 und eine oder mehrere Verbindungen der Formel II 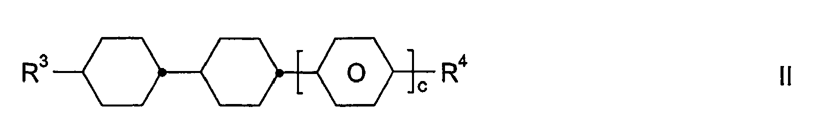 enthält, worin
R¹ H oder Alkyl mit 1 bis 5 C-Atomen,
R² Alkoxy mit 1 bis 12 C-Atomen,
R³ Alkenyl mit 2 bis 7 C-Atomen,
R⁴ Alkyl mit 1 bis 12 C-Atomen, wobei auch ein oder zwei nicht benachbarte CH₂-Gruppen durch -O-, -CH=CH-, -CO-, -OCO- oder -COO- so ersetzt sein können, daß O-Atome nicht direkt miteinander verknüpft sind, und
c 0 oder 1
bedeuten.

2. Medium nach Anspruch 1, **dadurch gekennzeichnet, daß** es zusätzlich eine oder mehrere Verbindungen der Formel III enthält 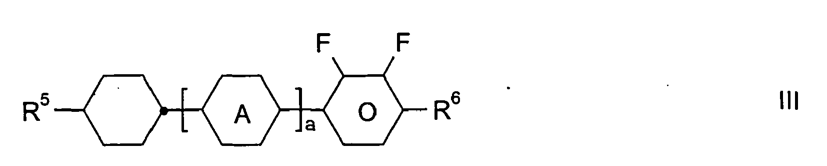 worin
R⁵ und R⁶ Alkyl mit 1 bis 12 C-Atomen, wobei auch ein oder zwei nicht benachbarte CH₂-Gruppen durch -O-, -CH=CH-,-CO-, -OCO- oder -COO- so ersetzt sein können, 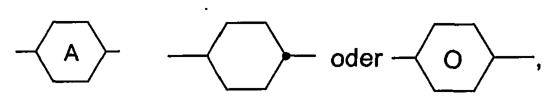 und
a 0 oder 1 bedeuten.

3. Medium nach Anspruch 1 oder 2, **dadurch gekennzeichnet, daß** es zusätzlich eine oder mehrere Verbindungen der Formel IV enthält 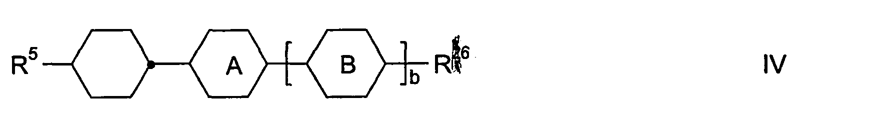 worin
R⁵ und R⁶ unabhängig voneinander eine der in Formel III angegebenen Bedeutungen haben, 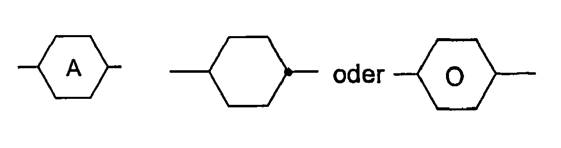 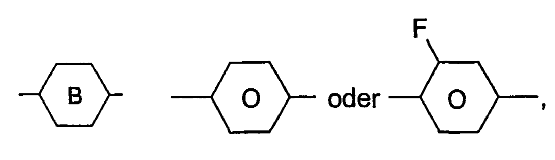 und
b 0 oder 1 bedeuten.

4. Medium nach mindestens einem der Ansprüche 1 bis 3, **dadurch gekennzeichnet, daß** es eine oder mehrere Verbindungen ausgewählt aus den folgenden Formeln enthält 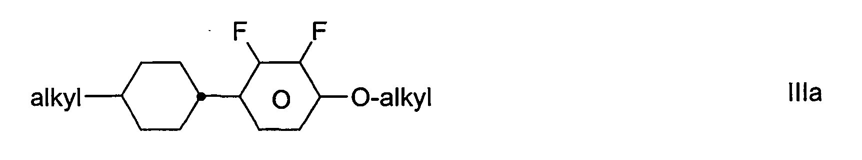 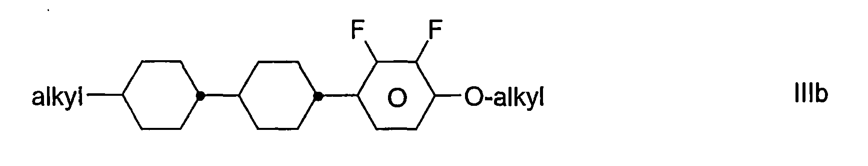 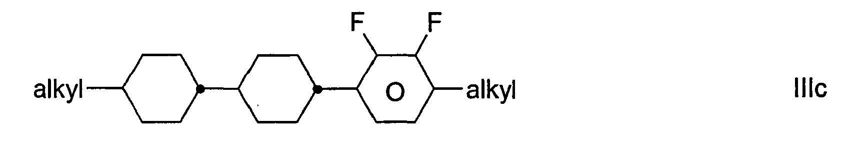 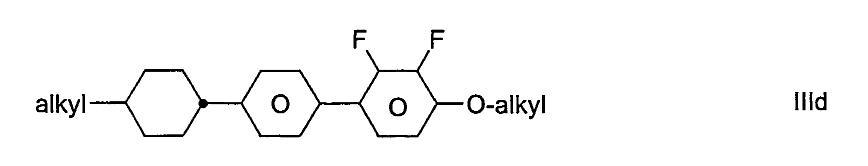 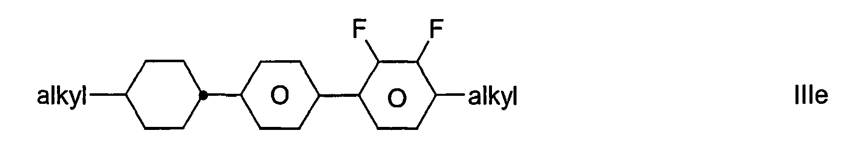 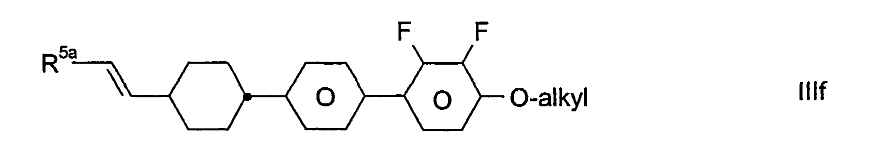 worin alkyl C₁₋₆-alkyl und R^{5a} H, Methyl, Ethyl oder n-Propyl, insbesondere H oder Methyl bedeutet.

5. Medium nach mindestens einem der Ansprüche 1 bis 4, **dadurch gekennzeichnet, daß** es eine oder mehrere Verbindungen ausgewählt aus den folgenden Formeln enthält 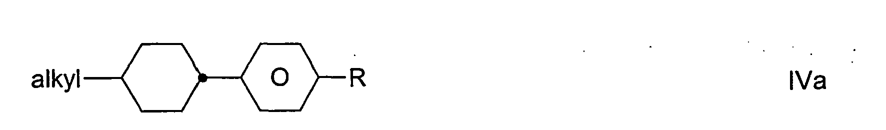 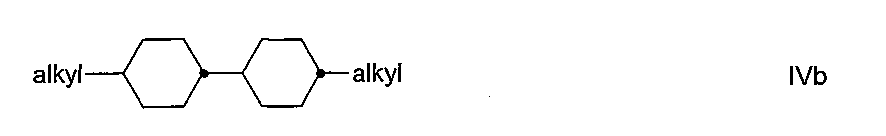 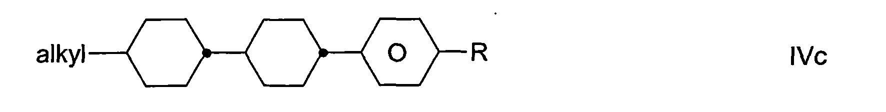 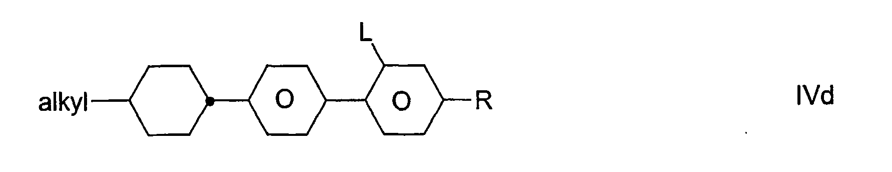 worin alkyl C₁₋₆-alkyl, R C₁₋₆-alkyl oder -alkoxy und L H oder F bedeuten.

6. Medium nach mindestens einem der Ansprüche 1 bis 5, **dadurch gekennzeichnet, daß** es eine oder mehrere Verbindungen ausgewählt aus den folgenden Formeln enthält 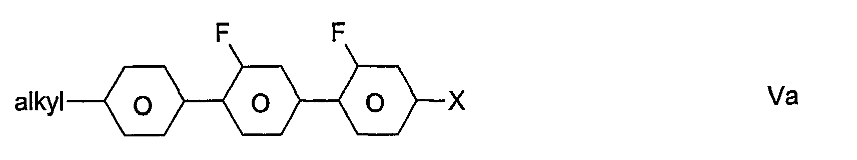 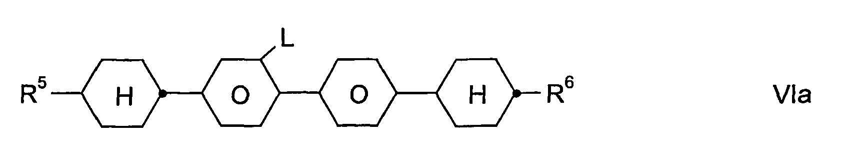 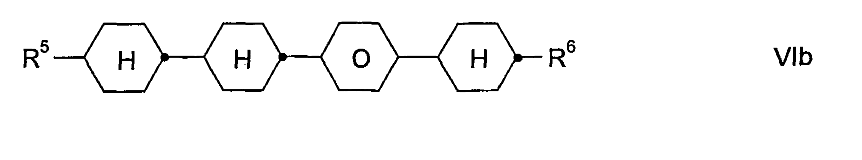 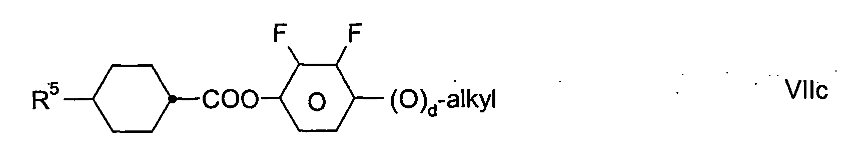 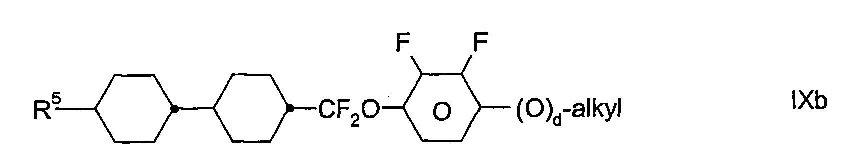 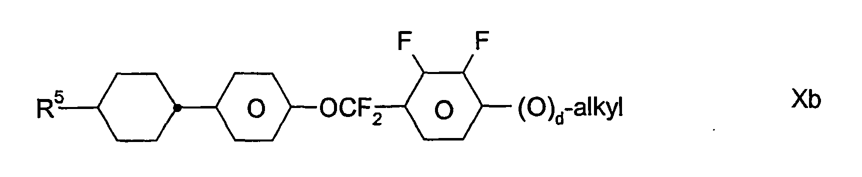 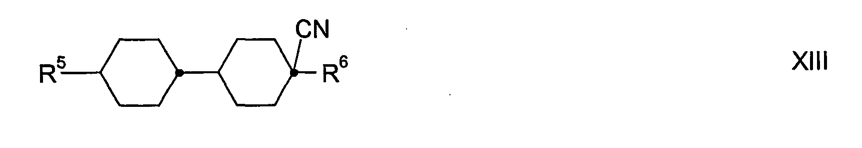 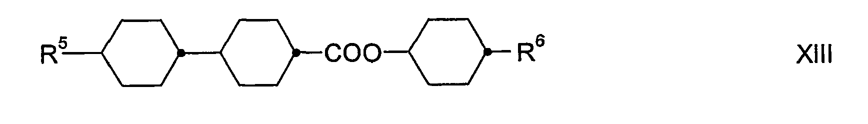 worin R⁵ und R⁶ die in Anspruch 2 angegebene Bedeutung besitzen alkyl C₁₋₆-alkyl, L H oder F, X F oder Cl und d 0 oder 1 bedeuten.

7. Medium nach mindestens einem der Ansprüche 1 bis 6, **dadurch gekennzeichnet, daß** es im wesentlichen aus 1 bis 4 Verbindungen der Formel I, 1 bis 6 Verbindungen der Formel II, 1 bis 10 Verbindungen der Formel III und 1 bis fünf Verbindungen der Formel IV besteht.

8. Medium nach mindestens einem der Ansprüche 1 bis 7, **dadurch gekennzeichnet, daß** der Anteil an Verbindungen der Formel I im Gesamtgemisch 5 bis 35 %, vorzugsweise 9 bis 25 % beträgt.

9. Medium nach mindestens einem der Ansprüche 1 bis 6, **dadurch gekennzeichnet, daß** der Anteil an Verbindungen der Formel II im Gesamtgemisch 5 bis 50 %, vorzugsweise 10 bis 36 % beträgt.

10. Medium nach mindestens einem der Ansprüche 1 bis 6, **dadurch gekennzeichnet, daß** es im wesentlichen aus
5-35 % einer oder mehrerer Verbindungen der Formel I,
5-50 % einer oder mehrerer Verbindungen der Formel II,
25-70 % einer oder mehrerer Verbindungen der Formel III, und
2-25 % einer oder mehrerer Verbindungen der Formel IV besteht.

11. Elektrooptische Anzeige mit einer Aktivmatrix-Addressierung, **dadurch gekennzeichnet, daß** sie als Dielektrikum ein flüssigkristallines Medium nach mindestens einem der Ansprüche 1 bis 10 enthält.

12. Elektrooptische Anzeige nach Anspruch 11, **dadurch gekennzeichnet, daß** sie auf dem ECB-, VA-, DAP-, CSH-, IPS-, ASM- oder PALC-Effekt beruht.

## Claims

1. Liquid-crystalline medium, **characterised in that** it comprises one or more compounds of the general formula 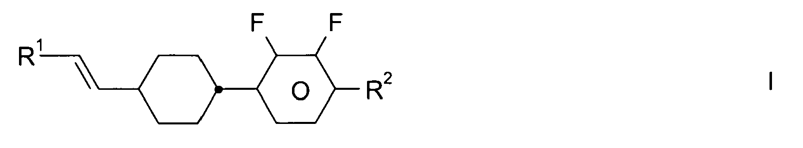 and one or more compounds of the formula II 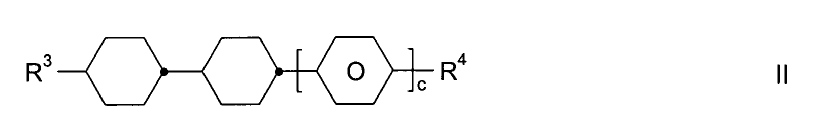 in which
R¹ denotes H or alkyl having 1 to 5 C atoms,
R² denotes alkoxy having 1 to 12 C atoms,
R³ denotes alkenyl having 2 to 7 C atoms,
R⁴ denotes alkyl having 1 to 12 C atoms, in which, in addition, one or two non-adjacent CH₂ groups may be replaced by -O-, -CH=CH-, -CO-, -OCO- or -COO- in such a way that O atoms are not linked directly to one another, and
c denotes 0 or 1.

2. Medium according to Claim 1, **characterised in that** it additionally comprises one or more compounds of the formula III 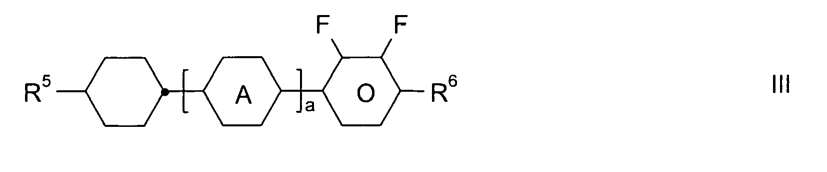 in which
R⁵ and R⁶ denote alkyl having 1 to 12 C atoms, in which, in addition, one or two non-adjacent CH₂ groups may be replaced by -O-, -CH=CH-, -CO-, -OCO- or -COO-, 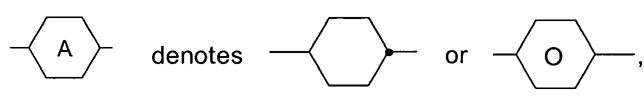 and
a denotes 0 or 1.

3. Medium according to Claim 1 or 2, **characterised in that** it additionally comprises one or more compounds of the formula IV 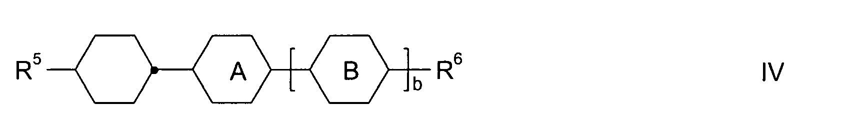 in which
R⁵ and R⁶, independently of one another, have one of the meanings indicated in formula III, 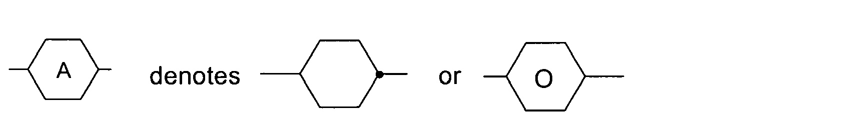 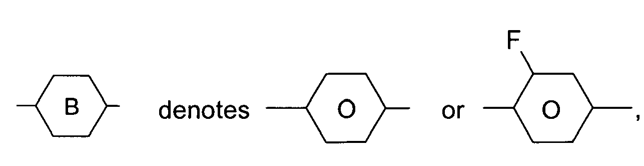 and
b denotes 0 or 1.

4. Medium according to at least one of Claims 1 to 3, **characterised in that** it comprises one or more compounds selected from the following formulae 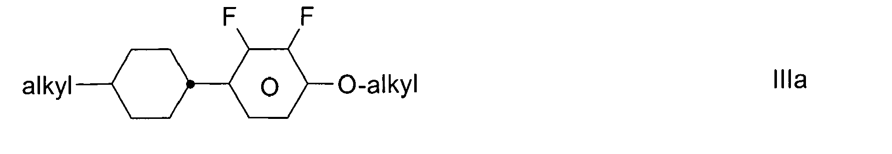 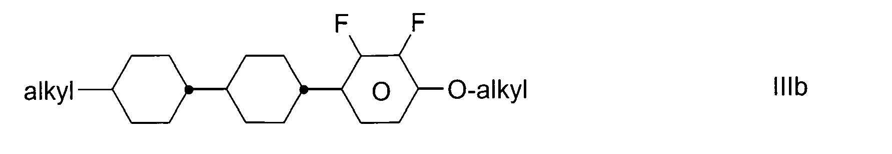 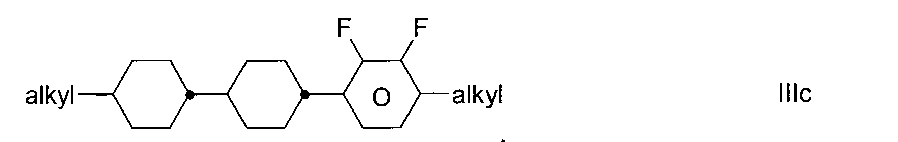 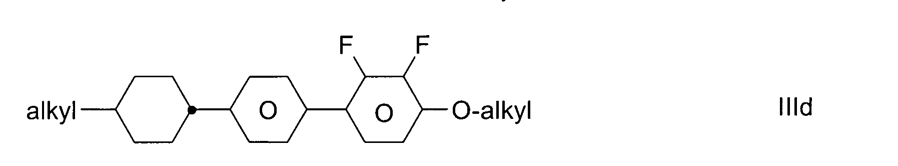 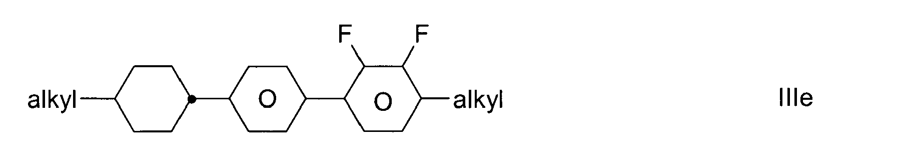 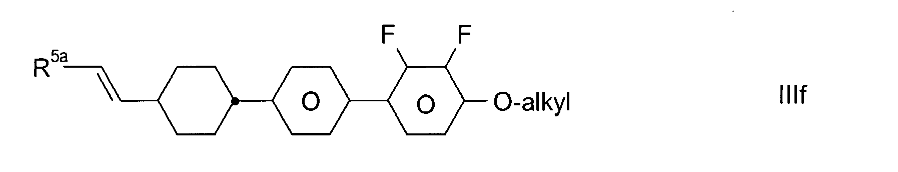 in which alkyl denotes C₁₋₆-alkyl, and R^{5a} denotes H, methyl, ethyl or n-propyl, in particular H or methyl.

5. Medium according to at least one of Claims 1 to 4, **characterised in that** it comprises one or more compounds selected from the following formulae 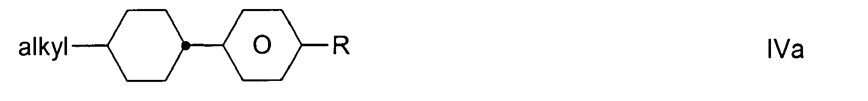 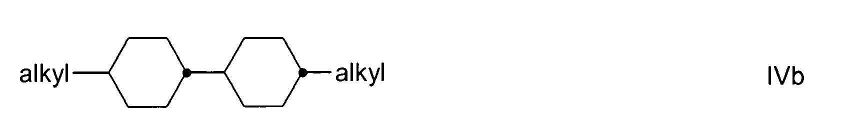 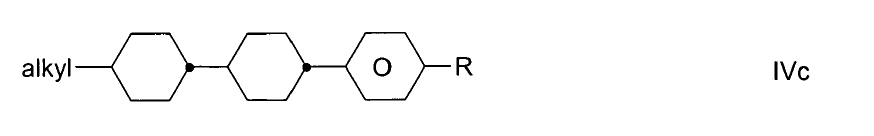 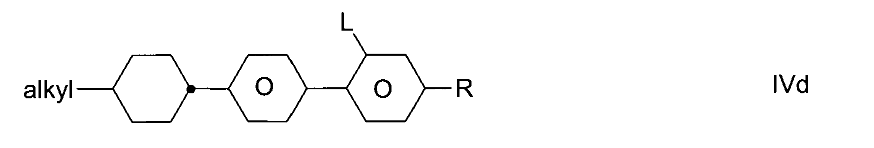 in which alkyl denotes C₁₋₆-alkyl, R denotes C₁₋₆-alkyl or -alkoxy, and L denotes H or F.

6. Medium according to at least one of Claims 1 to 5, **characterised in that** it comprises one or more compounds selected from the following formulae 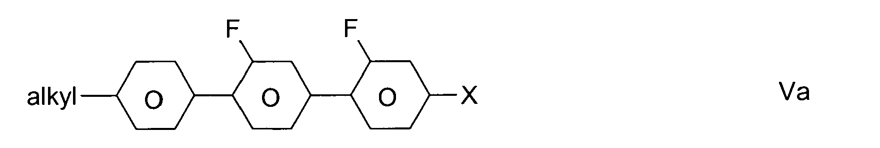 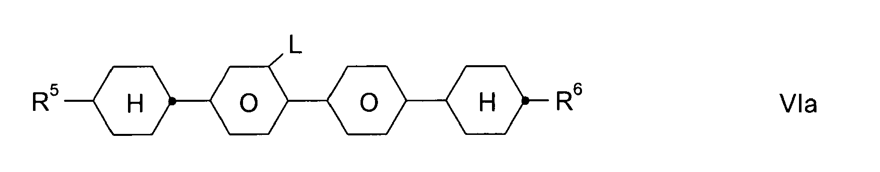 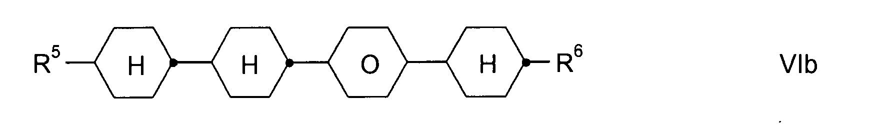 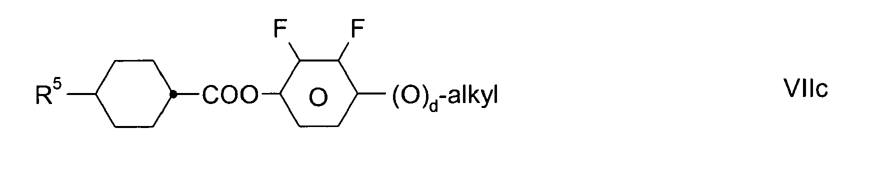 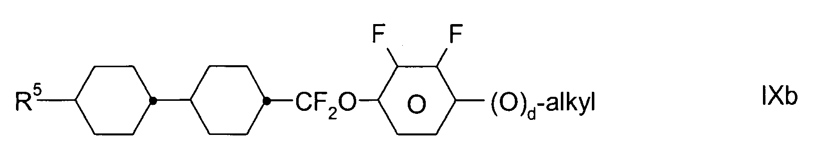 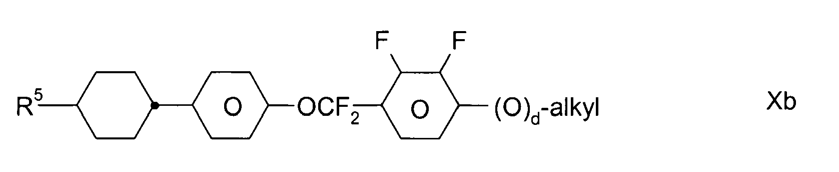 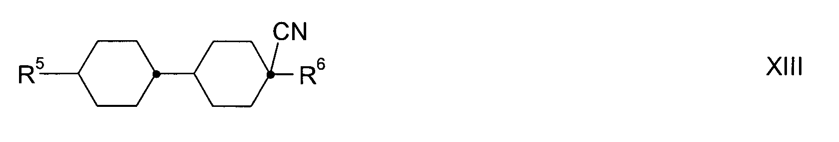 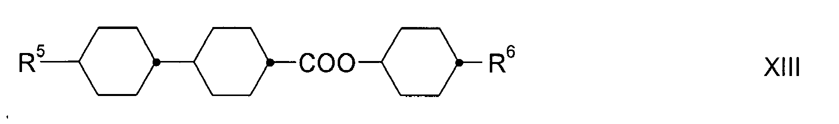 in which R⁵ and R⁶ have the meaning indicated in Claim 2, alkyl denotes C₁₋₆-alkyl, L denotes H or F, X denotes F or Cl, and d denotes 0 or 1.

7. Medium according to at least one of Claims 1 to 6, **characterised in that** it essentially consists of 1 to 4 compounds of the formula I, 1 to 6 compounds of the formula II, 1 to 10 compounds of the formula III and 1 to five compounds of the formula IV.

8. Medium according to at least one of Claims 1 to 7, **characterised in that** the proportion of compounds of the formula I in the mixture as a whole is 5 to 35%, preferably 9 to 25%.

9. Medium according to at least one of Claims 1 to 6, **characterised in that** the proportion of compounds of the formula II in the mixture as a whole is 5 to 50%, preferably 10 to 36%.

10. Medium according to at least one of Claims 1 to 6, **characterised in that** it essentially consists of
5-35% of one or more compounds of the formula I,
5-50% of one or more compounds of the formula II,
25-70% of one or more compounds of the formula III, and
2-25% of one or more compounds of the formula IV.

11. Electro-optical display having active-matrix addressing, **characterised in that** it contains, as dielectric, a liquid-crystalline medium according to at least one of Claims 1 to 10.

12. Electro-optical display according to Claim 11, **characterised in that** it is based on the ECB, VA, DAP, CSH, IPS, ASM or PALC effect.

## Revendications

1. Milieu de cristal liquide, **caractérisé en ce qu'**il comprend un ou plusieurs composés de la formule générale I 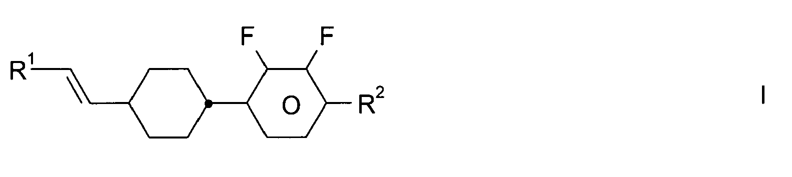 et un ou plusieurs composés de la formule II 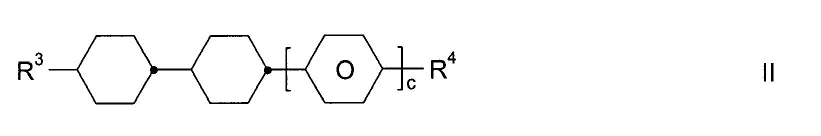 dans lesquelles
R¹ représente H ou alkyle comportant de 1 à 5 atomes de C,
R² représente alkoxy comportant de 1 à 12 atomes de C,
R³ représente alkényle comportant de 2 à 7 atomes de C,
R⁴ représente alkyle comportant de 1 à 12 atomes de C, où, en plus, un ou deux groupes CH₂ non adjacents peuvent être remplacés par -O-, -CH=CH-, -CO-, -OCO- ou -COO- de telle sorte que des atomes de O ne soient pas liés directement les uns aux autres, et
c représente 0 ou 1.

2. Milieu selon la revendication 1, **caractérisé en ce qu'**il comprend additionnellement un ou plusieurs composés de la formule III 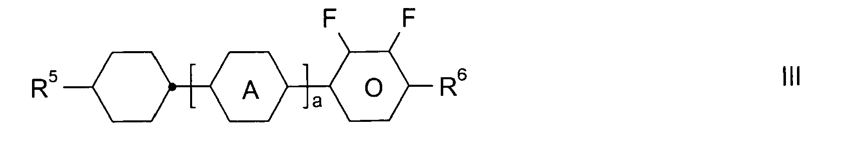 dans laquelle
R⁵ et R⁶ représentent alkyle comportant de 1 à 12 atomes de C, où, en outre, un ou deux groupes CH₂ non adjacents peuvent être remplacés par -O-, -CH=CH-, -CO-, -OCO- ou -COO-, 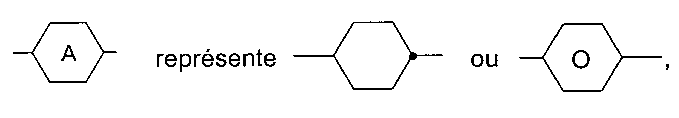 et
a représente 0 ou 1.

3. Milieu selon la revendication 1 ou 2, **caractérisé en ce qu'**il comprend additionnellement un ou plusieurs composés de la formule IV 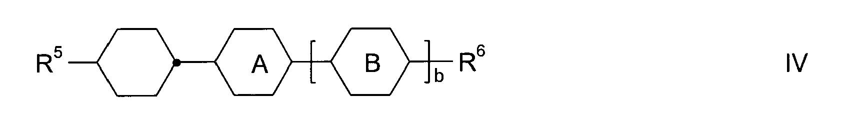 dans laquelle
R⁵ et R⁶, indépendamment l'un de l'autre, présentent l'une des significations indiquées dans la formule III, 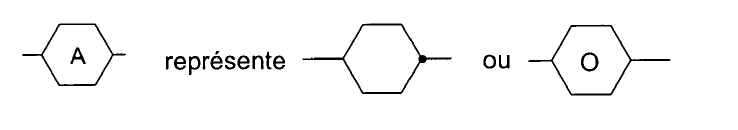 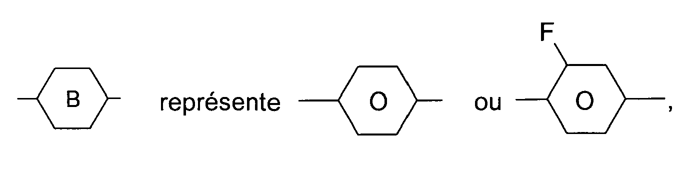 et
b représente 0 ou 1.

4. Milieu selon au moins l'une des revendications 1 à 3, **caractérisé en ce qu'**il comprend un ou plusieurs composés choisis parmi les formules qui suivent 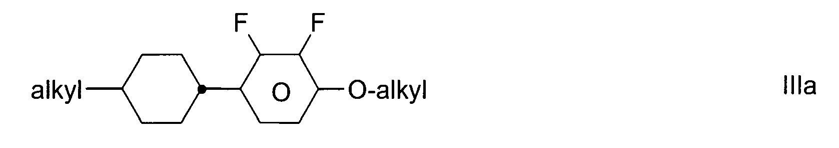 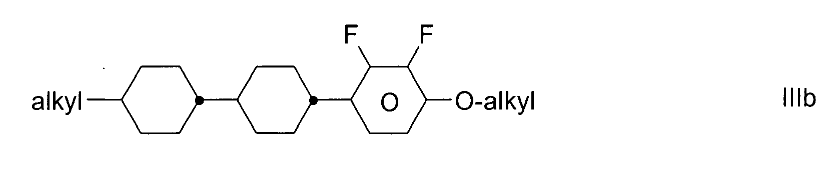 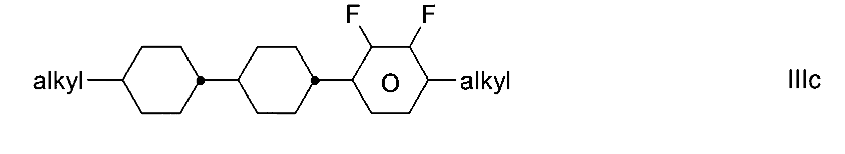 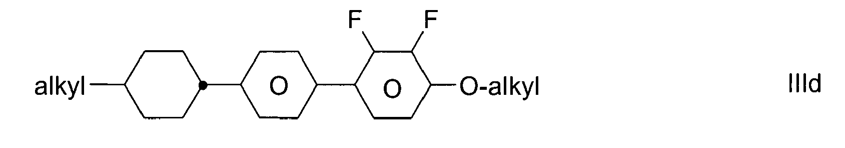 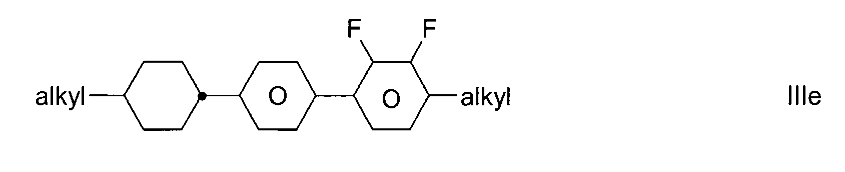 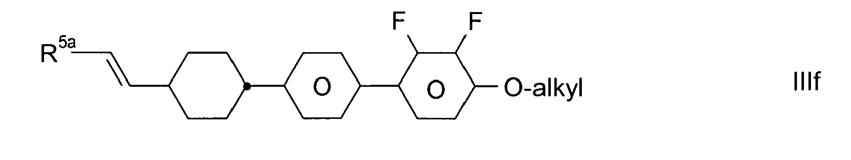 dans lesquelles alkyl représente C₁₋₆-alkyle, et R^{5a} représente H, méthyle, éthyle ou n-propyle, en particulier H ou méthyle.

5. Milieu selon au moins l'une des revendications 1 à 4, **caractérisé en ce qu'**il comprend un ou plusieurs composés choisis parmi les formules qui suivent 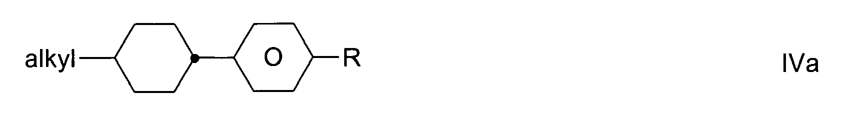 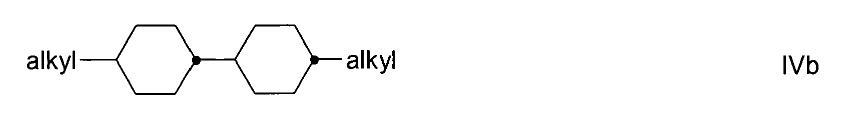 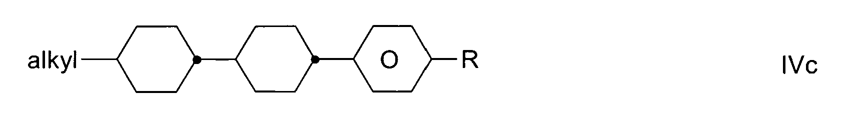 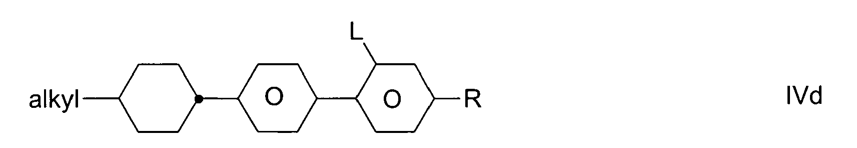 dans lesquelles alkyl représente C₁₋₆-alkyle, R représente C₁₋₆-alkyle ou -alkoxy, et L représente H ou F.

6. Milieu selon au moins l'une des revendications 1 à 5, **caractérisé en ce qu'**il comprend un ou plusieurs composés choisis parmi les formules qui suivent 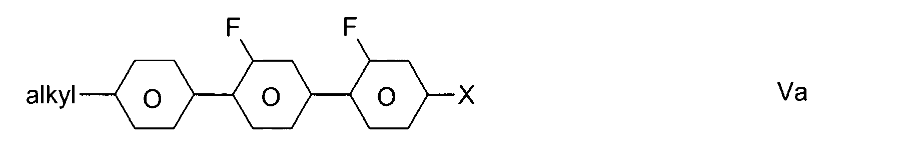 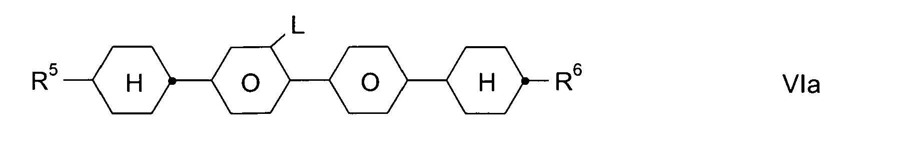 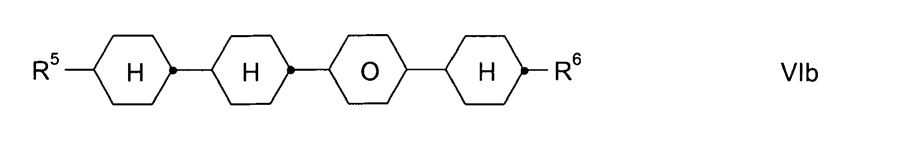 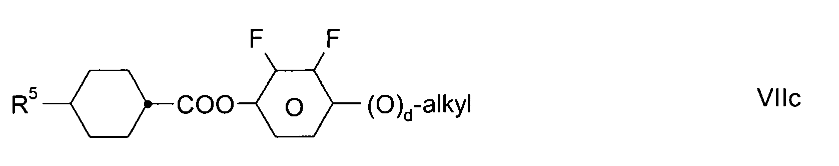 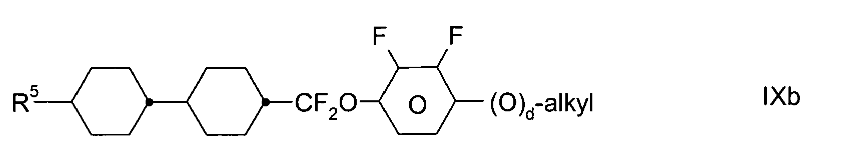 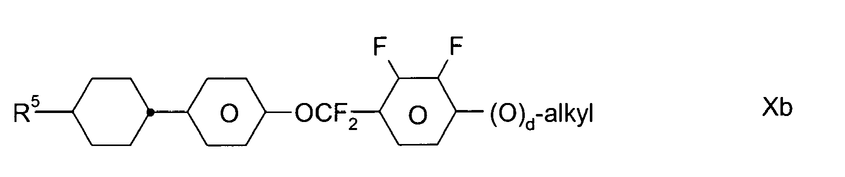 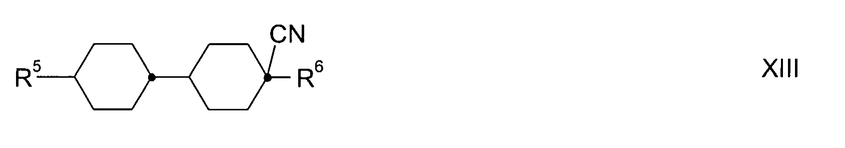 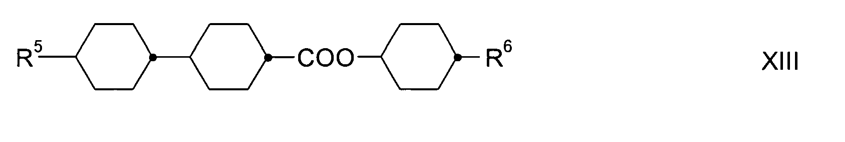 dans lesquelles R⁵ et R⁶ présentent la signification indiquée selon la revendication 2, alkyle représente C₁₋₆-alkyle, L représente H ou F, X représente F ou Cl, et d représente 0 ou 1.

7. Milieu selon au moins l'une des revendications 1 à 6, **caractérisé en ce qu'**il est essentiellement constitué par 1 à 4 composés de la formule I, par 1 à 6 composés de la formule II, par 1 à 10 composés de la formule III et par 1 à 5 composés de la formule IV.

8. Milieu selon au moins l'une des revendications 1 à 7, **caractérisé en ce que** la proportion de composés de la formule I dans le mélange pris dans sa globalité est de 5 à 35%, de préférence de 9 à 25%.

9. Milieu selon au moins l'une des revendications 1 à 6, **caractérisé en ce que** la proportion de composés de la formule I dans le mélange pris dans sa globalité est de 5 à 50%, de préférence de 10 à 36%.

10. Milieu selon au moins l'une des revendications 1 à 6, **caractérisé en ce qu'**il est essentiellement constitué par
5-35% d'un ou de plusieurs composés de la formule I,
5-50% d'un ou de plusieurs composés de la formule II,
25-70% d'un ou de plusieurs composés de la formule III, et
2-25% d'un ou de plusieurs composés de la formule IV.

11. Affichage électro-optique présentant un adressage par matrice active, **caractérisé en ce qu'**il contient, en tant que diélectrique, un milieu de cristal liquide selon au moins l'une des revendications 1 à 10.

12. Affichage électro-optique selon la revendication 11, **caractérisé en ce qu'**il est basé sur l'effet ECB, VA, DAP, CSH, IPS, ASM ou PALC.
